# DEMANDE DE BREVET EUROPEEN

(11) **EP 1 220 140 A1**
(43) Date de publication de la demande: **03.07.2002**
(21) Numéro de dépôt: 00204756.1
(22) Date de dépôt: 27.12.2000
(51) Int. Cl.: G06K 9/22

(54) **Procédé de reconnaissance de caractères tracés manuellement sur une zone de saisie et dispositif électronique permettant de mettre en oeuvre ce procédé**

(71) Demandeur: ASULAB S.A., CH-2501 Bienne (CH)
(72) Inventeur: Mignot, Jean-Pierre, 2034 Peseux (CH)
(74) Mandataire: Surmely, Gérard

(57) **Abrégé**

Il est décrit un procédé ainsi qu'un dispositif électronique de reconnaissance de caractères tracés manuellement sur une zone de saisie (10) comprenant une pluralité de capteurs (15) susceptibles chacun d'être actionné au moyen d'un doigt ou d'un instrument de traçage (13). Le procédé consiste à comparer le tracé manuel d'un caractère (100) réalisé sur la zone de saisie avec un ensemble de caractères d'un jeu prédéterminé de caractères. Selon l'invention, chaque caractère du jeu de caractères est représenté par au moins un modèle prédéterminé représentatif d'une manière avec laquelle ce caractère peut être tracé, et un modèle représentatif de la manière avec laquelle le tracé manuel du caractère (100) a été réalisé sur la zone de saisie (10) est élaboré.

Les modèles comprennent au moins des paramètres topologiques représentatifs de la topologie du caractère, à savoir, notamment,
- le nombre de passes (A, B, C, D) employées pour tracer le caractère;
- la nature uni- ou bidimensionnelle de chacune desdites passes (A, B, C, D); et
- la composition de chaque passe de nature bidimensionnelle, à savoir le nombre de segments (A1, A2, B1, B2, ...) composant la passe et la nature rectiligne ou courbe de chaque segment.

Les modèles comprennent en outre, le cas échéant, des paramètres géométriques (φ, φ₁, φ₂; α) représentatifs de l'évolution de l'orientation angulaire du tracé du segment et des paramètres géométriques (P₀, P₁, P₂) représentatifs de la position de la passe sur la zone de saisie.

## Description

La présente invention est relative à un procédé de reconnaissance de caractères tracés manuellement sur une zone de saisie ainsi qu'à un dispositif électronique permettant de mettre en oeuvre ce procédé.

Dans le cadre de la présente invention, on entendra notamment par "caractère" tout caractère alphanumérique (A, B, C, ..., 1, 2, 3...), de ponctuation (?, !, ., :, ...) ou symbolique (+, -, *, #,...) susceptible d'être tracé manuellement au moyen d'un doigt ou d'un instrument de traçage tel un stylet par exemple. Par extension, on entendra également tout tracé autre que le tracé d'un caractère alphanumérique ou symbolique, auquel est associé une commande particulière, un tel tracé étant défini dans la suite de la présente description en tant que caractère de commande. Ces caractères de commande sont notamment destinés à permettre certaines commandes particulières tels le déplacement d'un curseur, l'effacement d'un caractère précédemment introduit, la commutation entre majuscules et minuscules, etc.

On connaît déjà diverses solutions permettant la reconnaissance de caractères tracés manuellement sur une zone de saisie. De telles solutions sont notamment utilisées pour permettre une introduction manuelle de données, sans l'aide d'un clavier, dans des dispositifs électroniques, notamment des dispositifs électroniques portables tels que des agendas électroniques, des ordinateurs de poche ou des pièces d'horlogerie électroniques.

Une solution consiste à prévoir des algorithmes de reconnaissance complexes basés sur une grille de points ou image "bitmap" du caractère tracé, grille de points qui est comparée aux données modèles d'un jeu de caractères prédéterminé afin d'identifier le caractère le plus fidèle au tracé effectué. Cette solution est peu pratique et souvent beaucoup trop lourde et gourmande en temps et en puissance de calcul pour être appliquée, notamment dans des dispositifs électroniques portables. Un autre désavantage d'une telle solution réside dans le fait qu'elle nécessite un grand espace mémoire pour la définition des caractères à reconnaître. Une telle solution nécessite en outre un apprentissage de la part de l'utilisateur afin qu'il trace chaque caractère selon un motif déterminé.

Ainsi, la pratique courante est de proposer des dispositifs et des algorithmes de reconnaissance selon lesquels on examine le mouvement effectué lors du tracé du caractère sur la zone de saisie. Typiquement, les signaux émanant de la zone de saisie, ou plus exactement de la pluralité de capteurs formant cette zone de saisie, sont échantillonnés afin de déterminer l'historique de l'évolution du tracé du caractère.

Le document EP 0 695 979 au nom de la Demanderesse décrit par exemple un dispositif d'identification d'un caractère transcrit sur une surface ainsi qu'un procédé d'identification d'un tel caractère, notamment pour une montre. Selon ce document, une série d'identificateurs représentatifs des changements d'états ("ON" ou "OFF") des capteurs formant la zone de saisie est produite et comparée à au moins une série d'identificateurs de référence afin d'identifier le caractère transcrit.

Compte tenu de la complexité ainsi que de la forte ressemblance de certains caractères, la pratique courante est d'adopter certaines simplifications du jeu de caractères (par exemple décomposer les caractères en différents jeu de caractères alphabétiques, numériques, symboliques, etc., notamment pour éviter des confusions entre certains caractères tels "O" et "0", "B" et "8", "+" et "T", etc.) et de forcer l'utilisateur à tracer les caractères selon des séquences bien déterminées qui s'avèrent parfois contraires à son habitude ou même de toute forme d'habitude. Ainsi, avec les solutions existantes, il n'existe souvent qu'une possibilité de tracer chaque caractère afin qu'il ne soit pas confondu avec d'autres. De plus, les séquences qui doivent être adoptées ne correspondent pas forcément au tracé naturel du caractère désiré. Ces difficultés sont d'autant plus grandes que les caractéristiques d'une écriture sont fortement variables et parfois même complètement opposées, par exemple entre une écriture d'un droitier et une écriture d'un gaucher.

Les dispositifs et algorithmes de reconnaissance connus requièrent ainsi un apprentissage de la part de l'utilisateur ou impliquent des contraintes pour l'utilisateur. Si cet apprentissage n'est pas parfait ou si ces contraintes ne sont pas suivies, des erreurs peuvent apparaître lors de la saisie du texte désiré, erreurs qui rallongent le temps nécessaire à l'introduction de données.

Un but de la présente invention est donc de proposer une solution qui ne nécessite pour ainsi dire aucun apprentissage de la part de l'utilisateur, à savoir une solution qui soit susceptible de reconnaître des caractères tracés par l'utilisateur sans que celui-ci n'ait à sensiblement changer ses habitudes.

Un autre but de la présente invention est de proposer une solution qui soit susceptible de reconnaître des caractères alphanumériques, symboliques, de commande ou autres, tracés de diverses manières par l'utilisateur.

Encore un autre but de la présente invention est de proposer un telle solution qui ne soit toutefois pas trop complexe ni trop lourde à implémenter, de sorte qu'elle puisse être appliquée dans des dispositifs électroniques de faible volume, tels des agendas électroniques, des ordinateurs de poches, des pièces d'horlogerie, des téléphones portables, des télécommandes, ou tout autre dispositif électronique portable de taille réduite, notamment des dispositifs électroniques portables alimentés par batterie.

Encore un autre but de la présente invention est de limiter le nombre d'erreurs d'interprétation du caractère tracé, c'est-à-dire proposer une solution qui soit susceptible de rejeter certains tracés de caractère qui ne correspondraient aucunement à un caractère prédéterminé.

La présente invention a ainsi pour objet un procédé de reconnaissance de caractères tracés manuellement sur une zone de saisie d'un dispositif électronique dont les caractéristiques sont énoncées dans la revendication indépendante 1.

Des modes de mise en oeuvre avantageux de ce procédé font l'objet des revendications dépendantes.

La présente invention a également pour objet un dispositif électronique permettant de mettre en oeuvre le procédé selon l'invention dont les caractéristiques sont énoncées dans la revendication indépendante 10.

Des modes de réalisation avantageux de ce dispositif font l'objet des revendications dépendantes.

Un avantage de la présente invention réside dans le fait que les caractères ne sont pas modélisés comme des caractères en tant que tels, mais que chaque caractère est défini par au moins un modèle prédéterminé représentatif de la manière avec laquelle ce caractère peut être tracé. De même, le tracé manuel du caractère réalisé par l'utilisateur sur la zone de saisie est représenté par un modèle représentatif de la manière avec laquelle ce caractère a été tracé. Typiquement, un caractère sera défini par plus d'un modèle afin de prendre en compte les diverses manière de tracer manuellement celui-ci.

Plus particulièrement, selon l'invention, les modèles comprennent au moins des paramètres topologiques concernant la topologie du caractère, à savoir, notamment, :
- le nombre de passes employées pour tracer le caractère;
- la nature de chacune desdites passes, à savoir s'il s'agit d'une passe de nature unidimensionnelle (un point) ou bidimensionnelle (un ou plusieurs segments); et
- la composition de chaque passe de nature bidimensionnelle, à savoir :
   - le nombre de segments composant la passe de nature bidimensionnelle; et
   - la nature de chaque segment, à savoir s'il s'agit d'un segment de nature rectiligne ou courbe.

Avantageusement, on peut compléter les paramètres topologiques par une indication concernant la nature "ouverte" (par ex. caractères "B", "D", "O", "8", "0", etc.) ou "fermée" (par ex. caractères "A", "C", "E", etc.) d'une passe du tracé du caractère.

Par "topologie", on entendra, dans le cadre de la présente description, toutes les caractéristiques d'un caractère indépendantes de la taille et des dimensions exactes du caractère, c'est-à-dire indépendamment de la géométrie exacte du caractère. En particulier, dans le cadre de la présente invention, on entendra notamment le nombre de passes employées pour tracer le caractère ainsi que la nature et, le cas échéant, la composition de chacune desdites passes comme mentionné ci-dessus. On entendra également d'autres paramètres tel le sens de rotation d'un segment courbe comme mentionné plus loin.

Par "passe", on entendra, dans le cadre de la présente description, le tracé effectué par le doigt ou l'instrument de traçage sur la zone de saisie du début jusqu'à son interruption, chaque caractère pouvant être tracé en un nombre variable de passes, typiquement inférieur ou égal à quatre en ce qui concerne un caractère alphanumérique ou symbolique d'un jeu de caractères latins.

Par "segment", on entendra une portion d'une passe qui se distingue d'un autre segment de la passe de par sa nature rectiligne ou courbe et/ou de par un changement de direction significatif adopté par le doigt ou l'instrument de traçage durant l'exécution de la passe en question.

Les modèles comprennent en outre, le cas échéant, pour chaque segment de nature rectiligne ou courbe, des paramètres géométriques représentatifs de l'évolution de l'orientation angulaire du tracé du segment. Préférablement, les paramètres géométriques représentatifs de l'évolution de l'orientation angulaire du tracé du segment incluent :
- pour chaque segment de nature rectiligne, l'orientation angulaire (désignée φ) du segment; ou
- pour chaque segment de nature courbe, l'orientation angulaire de départ ou d'arrivée (désignées respectivement φ₁, φ₂) à une extrémité du segment (dont les positions sont désignées respectivement P₁, P₂).

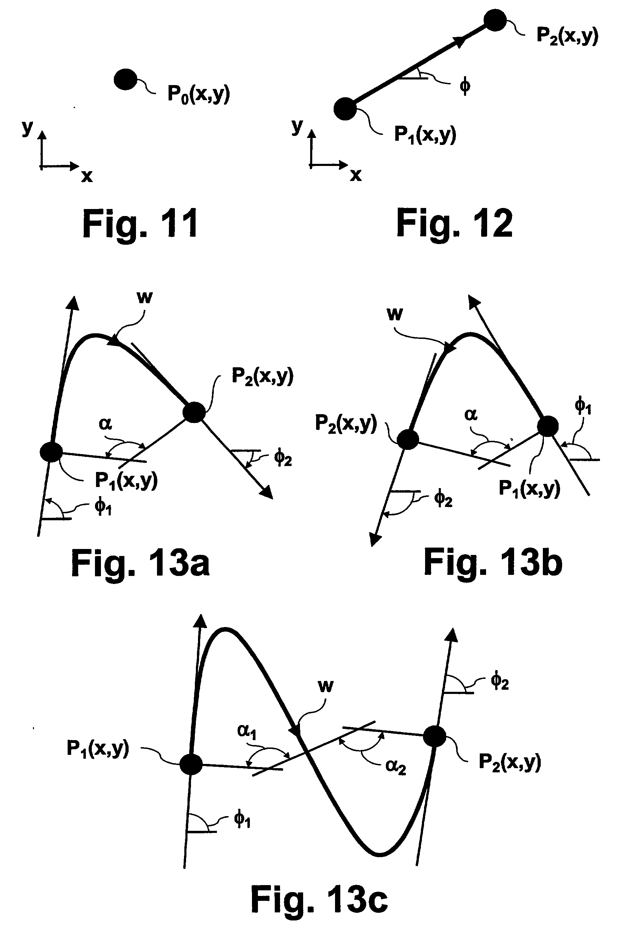

Il convient de préciser que par "orientation angulaire", on comprendra l'orientation et la direction d'un segment rectiligne, ou d'une tangente à un segment courbe prise en un point de ce segment courbe, indiquée par une valeur d'angle, comme cela est illustré schématiquement dans les figures 12 et 13a à 13c. Dans la suite de la description, on définira de préférence, uniquement pour les besoins de l'explication, l'orientation angulaire d'un segment ou d'une tangente comme étant comprise entre les valeurs -180° et 180°. On comprendra toutefois que ces valeurs sont définies à n·360° près (n étant un nombre entier), -180° et 180° désignant ainsi la même orientation angulaire.

Il convient de préciser ici que l'orientation angulaire de départ ou d'arrivée correspond à l'orientation angulaire de la tangente à une extrémité du segment de nature courbe, cette tangente étant définie, au minimum, par les deux premiers échantillons, respectivement, les deux derniers échantillons, du tracé du segment en question. En pratique, on utilisera typiquement une moyenne sur plusieurs échantillons successifs du tracé du segment courbe en début, respectivement en fin, pour déterminer une valeur de cette orientation angulaire de départ ou d'arrivée.

Dans le cas mentionné ci-dessus, les paramètres concernant la topologie du caractère incluent par ailleurs, pour chaque segment de nature courbe, le sens de rotation (désigné w) du segment, ce sens de rotation étant au moins trigonométrique (dans le sens inverse des aiguilles d'une montre) ou non-trigonométrique (dans le sens des aiguilles d'une montre).

Dans un tel cas, il peut également être utile de définir, outre les sens de rotation trigonométrique ou non-trigonométrique, un troisième sens de rotation dit mixte ou variable, c'est-à-dire un sens de rotation qui varie entre sens trigonométrique et non-trigonométrique, une telle caractéristique étant par exemple présente dans certains tracés de caractères, tels des tracés des caractères "N", "M", "W", "S", "2", "5", "8", etc. Alternativement, on comprendra que l'on pourra diviser un tel segment courbe de sens de rotation mixte en une pluralité de segments courbes de sens de rotation trigonométrique ou non-trigonométrique.

Les paramètres géométriques représentatifs de l'évolution de l'orientation angulaire du segment peuvent encore avantageusement inclure, pour un segment de nature courbe, l'angle de développement total (désigné α) du segment de nature courbe. Dans le cas d'un segment courbe de sens de rotation mixte, on définira préférablement cet angle de développement total comme étant la somme, en valeur absolue, des angles de développement totaux de chaque portion de sens de rotation trigonométrique et non-trigonométrique. L'angle de développement total α permet de simplifier l'identification de certains caractères particuliers.

Outre les paramètres géométriques représentatifs de l'évolution de l'orientation angulaire du tracé du caractère, chaque modèle comprend par ailleurs des paramètres géométriques représentatifs de la position de chaque passe sur la zone de saisie, en particulier et avantageusement la position de chaque passe de nature unidimensionnelle (un point) ou la position des extrémités de chaque passe de nature bidimensionnelle. Avantageusement, ces paramètres géométriques peuvent être complétés par la position des extrémités de chaque segment composant une passe de nature bidimensionnelle.

On comprendra que la position d'une passe de nature unidimensionnelle ou des extrémités d'une passe de nature bidimensionnelle peut être définie par rapport à la zone de saisie sur laquelle la passe a été réalisé ou, alternativement, par rapport au tracé du caractère concerné. D'une manière générale, dans le cadre de la présente invention, on utilisera essentiellement des indications de position relative par rapport au tracé du caractère, c'est-à-dire des indications de position permettant de définir si telle passe se trouve dans une partie haute ou basse, et/ou gauche ou droite du tracé du caractère. On utilisera exceptionnellement, pour certains caractères (par exemple "/", "," et"'") des indications de position relative par rapport à la zone de saisie sur laquelle la passe a été tracée pour différencier des caractères dont les tracés ne se distinguent que par leur position sur la zone de saisie.

On comprendra également que tous les modèles ne nécessitent pas obligatoirement une définition géométrique de leurs caractéristiques. Ainsi, certains caractères peuvent être définis de manière univoque uniquement au moyen de paramètres topologiques.

Les figures 11, 12, 13a, 13b et 13c illustrent de manière schématique les définitions ci-dessus. En particulier, la figure 11 est une illustration d'une passe unidimensionnelle, c'est-à-dire un point, défini par sa position P₀. La figure 12 est une illustration d'un segment de nature rectiligne défini par son orientation angulaire φ et les positions P₁, P₂ de ses extrémités. Les figures 13a, 13b et 13c sont des illustrations de segments de nature courbe défini chacun par les orientations angulaires de départ et d'arrivée φ₁, φ₂ aux extrémités du segment, les positions P₁, P₂ des extrémités, ainsi que le sens de rotation w, respectivement non-trigonométrique, trigonométrique et mixte dans les figures 13a à 13c.

Dans les figures 13a, 13b et 13c, on a également indiqué l'angle de développement total α de chaque segment courbe. Dans la figure 13c, on notera que l'angle de développement total α est défini, dans ce cas de figure, comme la somme en valeur absolue des angles de développement totaux, désignés α₁, α₂, des portions trigonométrique(s) et non-trigonométrique(s) du segment courbe.

A titre d'exemple, un segment rectiligne vertical tracé de haut en bas sera défini comme ayant une orientation angulaire φ de -90°, alors qu'un segment rectiligne vertical tracé de bas en haut sera défini comme ayant une orientation angulaire φ de +90°. Un segment rectiligne tracé de gauche à droite sera défini comme ayant une orientation angulaire de 0° et un segment rectiligne tracé de droite à gauche sera défini comme ayant une orientation angulaire de ±180°. Comme déjà mentionné, ces orientations angulaires sont définies à n·360° près.

De même, un segment courbe représentant un "C" tracé de haut en bas ou de bas en haut (le sens de rotation w étant trigonométrique ou non-trigonométrique) sera, à titre d'exemple uniquement, défini comme ayant une orientation angulaire de départ φ₁ d'approximativement ±180° et une orientation angulaire d'arrivée φ₂ d'approximativement 0° (l'angle de développement total α est de 180°). Ces deux segments courbes ne différent que par leur sens de rotation.

Lors de l'analyse du tracé manuel réalisé sur la zone de saisie, on "développera" préférablement l'orientation angulaire de chaque segment afin d'éviter la césure se présentant à ±180° compte tenu de la définition employée et de la périodicité de 360° de la notion d'angle. Prenons, à titre d'exemple, un tracé courbe similaire au tracé du caractère "C", réalisé dans le sens trigonométrique (de haut en bas) et présentant une orientation angulaire de départ d'environ 170° et une orientation angulaire d'arrivée de 0° environ, l'orientation angulaire du segment sera développée de 170° à 360° (l'angle de développement total α est de 190°). Dans le cas d'un tracé courbe analogue, débutant par exemple par une orientation angulaire de -170° et se terminant par une orientation angulaire de 0°, l'orientation angulaire du segment sera développée de -170° à 0° (l'angle de développement total α est ici de 170°), etc.

En comparant les orientations angulaires de ces deux exemples de tracés avec un modèle du caractère "C" présentant un sens de rotation w de type trigonométrique et défini comme ayant des orientations angulaires de départ et d'arrivée de ±180° et 0° respectivement, on aboutira au final à un écart, en terme d'orientation angulaire, de 10° pour les deux exemples en tenant compte de la périodicité de 360°.

Un segment courbe représentant le caractère "S" tracé de haut en bas pourra par exemple être défini comme ayant des orientations angulaires de départ et d'arrivée φ₁ et φ₂ sensiblement égales à ±180° et un sens de rotation mixte ou variable (l'angle de développement total α est, en valeur absolue, de 180°+180° = 360° environ). Alternativement, comme déjà mentionné, ce segment courbe pourrait être décomposé en deux segments courbes successifs de sens de rotation respectivement trigonométrique et non-trigonométrique (chacun ayant un angle de développement total α de 180°).

Selon l'invention, l'utilisation de critères topologiques, c'est-à-dire des critères indépendants de la forme et des dimensions exactes du caractère, permet d'effectuer un tri et une présélection importante des candidats susceptibles de correspondre au caractère tracé, sans qu'il soit nécessaire de faire appel, à ce stade, à des considérations d'ordre géométrique. En effet, le seul fait d'examiner le nombre ainsi que la nature et la composition des passes employées pour tracer le caractère permet déjà de restreindre grandement l'étendue des recherches nécessaires pour identifier le caractère tracé. La différentiation entre segments rectilignes et courbes permet d'affiner la présélection des candidats. Il est même possible, dans certains cas, d'identifier de manière univoque le caractère tracé sur la base de ces seuls critères topologiques. Comme on le verra plus loin en détail, cette possibilité est en particulier utilisée afin d'identifier certains caractères de commande spécifiques.

Les critères géométriques, à savoir la ou les orientations angulaires d'un segment et, le cas échéant, la position d'un point ou d'un segment ne sont appliqués qu'ultérieurement afin d'écarter les candidats non valides. En particulier, selon l'invention, on compare préférablement en premier lieu les orientations angulaires des segments composant le caractère tracé avec les orientations angulaires des segments des candidats et on sélectionne le ou les candidats les plus fidèles sur cette base. Si cette sélection aboutit à un ensemble de plusieurs candidats, on utilise alors les informations de position des passes (à savoir la position d'une passe unidimensionnelle et/ou la position d'au moins un point représentatif d'une passe bidimensionnelle) du caractère tracé pour identifier le meilleur candidat.

Grâce à l'invention, il est ainsi possible de modéliser un grand nombre de caractères (au moins 80 caractères sans compter les minuscules) ainsi qu'un grand nombre de variantes de tracés pour un même caractère, l'apprentissage pour l'utilisateur étant ainsi limité et l'utilisation du dispositif implémentant ce procédé facilitée. Le taux de reconnaissance résultant de la mise en oeuvre du procédé de reconnaissance selon la présente invention est par ailleurs très élevé et le risque d'introduction de données erronées est donc limité. Il est en outre très aisé de rajouter de nouveaux modèles, l'approche utilisée étant applicable quelque soit le nombre ou la complexité des modèles définis.

Encore un autre avantage de la présente invention est de permettre la prise en compte de caractéristiques d'écriture propres à un droitier et/ou un gaucher.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1 est une vue en coupe schématique d'une pièce d'horlogerie comportant un dispositif de reconnaissance de caractères selon la présente invention;
- la figure 2 montre un agencement spatial de capteurs formant une zone de saisie du dispositif de reconnaissance de caractère;
- la figure 3 montre un schéma bloc d'un dispositif de reconnaissance de caractères selon la présente invention employant, de manière non-limitative, un réseau de capteurs capacitifs comme illustré en figure 2;
- les figures 4a à 4d illustrent de manière non exhaustive un jeu de modèles de caractères alphanumériques, symbolique et de commande pouvant être défini dans le cadre de la présente invention;
- la figure 5 illustre un tracé possible du caractère "A" sur la zone de saisie de la figure 2;
- les figures 6a à 6c montrent trois exemples de tracé du caractère "R" ainsi qu'un diagramme illustrant l'évolution du tracé de ce caractère, en termes d'orientation angulaire, pour chaque passe employée pour effectuer ce tracé;
- les figures 7a et 7b montrent un organigramme d'un exemple de mise en oeuvre du procédé de reconnaissance de caractères selon l'invention;
- les figures 8a et 8b montrent un organigramme variante de mise en oeuvre du procédé illustré aux figures 7a et 7b;
- les figures 9a et 9b montrent, à titre illustratif, respectivement un tracé possible du caractère "R" et des candidats présentant une topologie similaire;
- les figures 10a et 10b montrent, à titre illustratif, respectivement un tracé possible du caractère "T" et des candidats présentant une topologie similaire;
- la figure 11 est une représentation de la définition d'une passe unidimensionnelle, c'est-à-dire un point;
- la figure 12 est une représentation de la définition d'un segment de nature rectiligne; et
- les figures 13a à 13c sont des représentations des définitions d'un segment de nature courbe possédant respectivement un sens de rotation non-trigonométrique, trigonométrique et mixte.

Le dispositif de reconnaissance selon la présente invention sera décrit dans le cadre d'une application particulière, à savoir une application dans une pièce d'horlogerie. On comprendra néanmoins que l'invention s'applique de manière équivalente à tout autre dispositif électronique dans lequel on désire introduire des données au moyen d'un doigt ou d'un instrument de traçage. On comprendra également que la nature et la composition de la zone de saisie du dispositif de reconnaissance ne sont pas déterminantes. Ainsi, bien que la zone de saisie soit définie dans le cadre de la présente description comme comportant des capteurs de type capacitif, on comprendra aisément que tout autre type de capteurs peut être utilisé, tels des capteurs optiques, ohmiques, inductifs, des capteurs de propagation d'ondes acoustiques de surface (SAW) ou tout autre type de capteur susceptible d'être actionné par un doigt ou un instrument de traçage de manière à produire un signal pouvant être utilisé pour extraire des informations de topologie et de géométrie du tracé réalisé sur la zone de saisie.

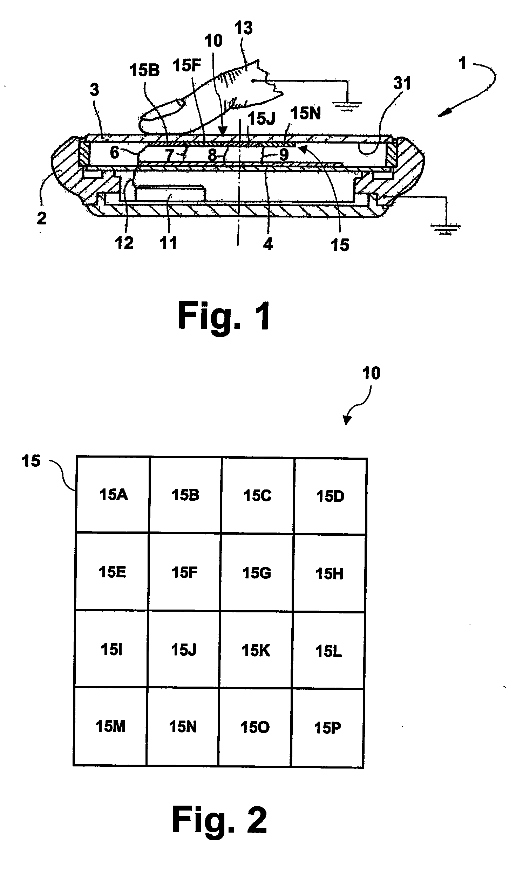

La figure 1 représente une vue en coupe d'une pièce d'horlogerie 1 comportant un boîtier 2 et une glace 3. Un circuit électronique 4 est disposé dans le boîtier 2. Des électrodes conductrices, de préférence transparentes, sont disposées sur la face intérieure 31 de la glace 3, seules quatre de ces électrodes, référencées respectivement 15B, 15F, 15J et 15N, ayant été représentées sur la figure 1. Comme déjà mentionné, cet agencement de capteurs n'est nullement et aucunement limitatif.

Les électrodes conductrices 15B, 15F, 15J et 15N sont respectivement reliées au circuit électronique 4 par des conducteurs 6, 7, 8 et 9. Une pile 11 ou autre source d'énergie électrique (tel un accumulateur rechargeable) est également disposée dans le boîtier 2 et est reliée à un pôle d'alimentation du circuit électronique 4 par un conducteur 12.

Chacune des électrodes conductrices 15B, 15F, 15J, 15N (15A à 15P dans la figure 2) forme l'une des armatures d'une série de capteurs capacitifs, désignés globalement par la référence 15, l'autre armature de chacun de ces capteurs capacitifs 15 étant essentiellement formée par le doigt 13 de l'utilisateur de la pièce d'horlogerie 1 lorsqu'il touche la face extérieure du verre 3 en face d'une électrode particulière. Ces capteurs capacitifs 15 forment ensemble une zone de saisie 10 permettant l'introduction de données, ici au moyen du doigt 13 de l'utilisateur. Ce doigt 13 est relié à la masse du circuit électronique 4 par l'intermédiaire du boîtier 2 qui est en contact avec le poignet de l'utilisateur, cette masse étant typiquement reliée au pôle négatif de la pile 11 et au circuit électronique 4.

La figure 2 montre une vue en plan d'un exemple de disposition spatiale des capteurs capacitifs 15 comportant des électrodes conductrices référencées 15A à 15P et formant la zone de saisie 10 du dispositif de reconnaissance. Cette zone de saisie 10 comprend dans cet exemple une pluralité de capteurs 15, en l'occurrence au nombre de seize, agencés sous la forme d'une matrice quatre par quatre comme illustré.

On notera par ailleurs qu'une capacité parasite est, par construction, présente entre chacune des électrodes conductrices 15A à 15P et le boîtier 2 de la pièce d'horlogerie 1. Chacun des capteurs capacitifs 15, dont les électrodes conductrices font partie, et la capacité parasité associée à ce capteur capacitif sont branchés en parallèle entre la masse et une entrée du circuit électronique 4.

On décrira maintenant des moyens de détection du circuit électronique 4 propres à l'utilisation de capteurs capacitifs, ces moyens de détection n'étant décrits qu'à titre purement illustratif et non limitatif.

On pourra se référer aux documents EP 0 674 247 et EP 0 838 737, également au nom de la Demanderesse, ainsi qu'au document EP 0 695 979 déjà mentionné en préambule, et qui sont tout trois incorporés ici par référence, pour obtenir des informations détaillées quant à la réalisation du circuit électronique 4. On se contentera ici de dire que chaque capteur capacitif, ainsi que la capacité parasite présente en parallèle, est connectée à l'entrée d'un oscillateur commandé en tension, la fréquence de cet oscillateur variant en fonction de la capacité totale présente entre son entrée et la masse. On notera que chaque capteur capacitif peut être connecté à son propre oscillateur commandé en tension ou, alternativement, tous être connectés à un unique oscillateur commandé en tension par l'intermédiaire d'un multiplexeur. L'utilisation d'un multiplexeur exige bien évidemment une période de multiplexage de sensiblement courte durée inférieure au déplacement du doigt ou de l'instrument de traçage sur la zone de saisie et à la période d'échantillonnage des signaux, de sorte que les signaux émanant de chaque capteur soient considérés, à un instant donné, comme étant des mesures simultanée de l'état des capteurs.

Plus particulièrement, la fréquence d'oscillation du signal produit en sortie de l'oscillateur commandé en tension est proportionnelle à l'inverse de la capacité totale des deux capacités branchées en parallèle. Ainsi, si le doigt 13 de l'utilisateur de la pièce d'horlogerie 1 n'est pas posé sur la glace 3 en regard d'une électrode particulière, une des armatures du capteur capacitif correspondant n'est par conséquent pas formée. Dans ce cas, la capacité totale présente entre l'entrée et la masse de l'oscillateur est équivalente à la valeur de la capacité parasite, et la fréquence d'oscillation du signal de sortie de l'oscillateur commandé en tension est proportionnelle à l'inverse de celle-ci.

Par contre, lorsque le doigt 13 est posé sur la glace 3 en regard d'une électrode particulière, la capacité totale est affectée par la présence de ce doigt. En conséquence, la fréquence d'oscillation du signal de sortie de l'oscillateur commandé en tension est proportionnelle à l'inverse de la somme des capacités. On notera en outre que la variation de la fréquence causée par la présence du doigt 13 est dépendante de la surface de l'électrode couverte par le doigt 13. Ainsi, on peut détecter non seulement la présence ou l'absence du doigt 13 en regard des électrodes mais également le degré de couverture de ces électrodes par le doigt 13.

L'information désirée dans le signal de sortie est contenue dans la fréquence du signal produit par l'oscillateur commandé en tension. Il suffit ainsi d'utiliser des moyens numériques conçus d'une façon simple pour extraire cette information. On peut ainsi par exemple comptabiliser le nombre de passage par zéros du signal de sortie durant une période déterminée (ou alternativement le nombre d'impulsions) pour extraire l'information nécessaire des divers capteurs.

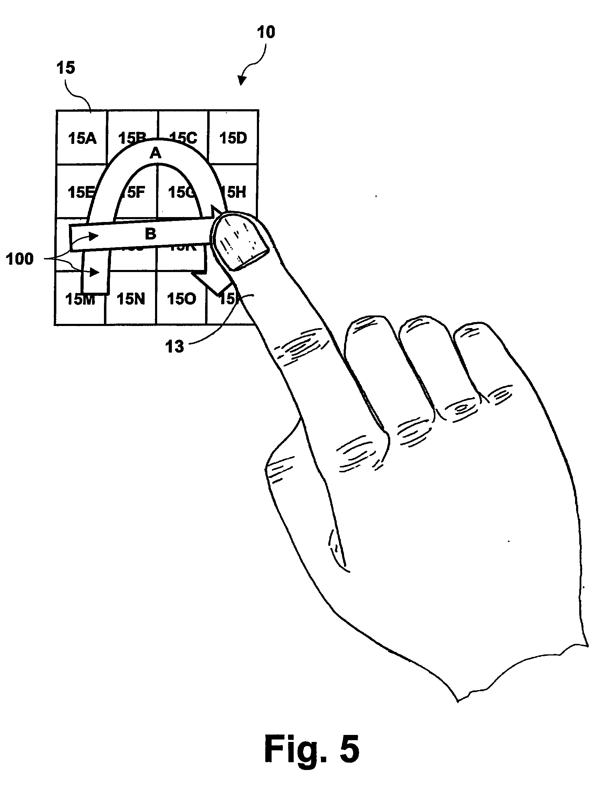

On comprendra que l'on peut s'affranchir d'examiner la variation de la fréquence en fonction du degré de couverture des capteurs et se contenter d'examiner l'état d'activité ou d'inactivité de chaque capteur pour autant que la résolution de la zone de saisie, c'est-à-dire le nombre de capteurs, soit suffisante pour obtenir une image suffisamment précise du tracé manuel réalisé sur cette zone de saisie. La résolution de la zone de saisie dépend également de l'outil de traçage utilisé et de sa surface de contact avec la zone de saisie, la zone de contact d'un doigt étant par exemple bien évidemment plus grande que celle d'un stylet par exemple. L'agencement illustré en figure 2 (et en figure 5) est particulièrement adapté pour permettre l'utilisation d'un doigt comme outil de traçage, chaque capteur ayant une surface de l'ordre 1 cm² inférieure à la taille de la surface de contact typique d'un doigt.

En complément, il sera avantageux de pourvoir la pièce d'horlogerie, ou, d'une manière plus générale, le dispositif électronique dans lequel est incorporé le dispositif de reconnaissance selon la présente invention, de moyens d'affichage (non représentés dans la figure 1) permettant de fournir à l'utilisateur une indication du tracé qu'il a effectué sur la zone de saisie 10. De tels moyens d'affichage, constitués par exemple d'un affichage à cristaux liquides, peuvent avantageusement être disposés dans la pièce d'horlogerie de la figure 1 de manière à faciliter l'utilisation du dispositif de reconnaissance, l'utilisateur bénéficiant d'une information de confirmation directement lisible en regard de la zone de saisie 10.

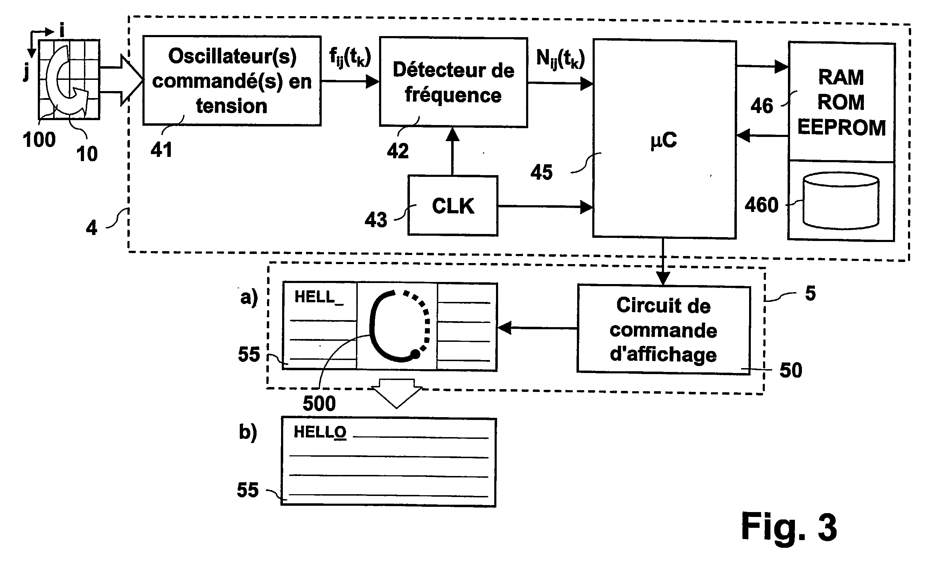

La figure 3 montre un schéma bloc particulier d'un dispositif de reconnaissance de caractères selon la présente invention employant un réseau de capteurs capacitifs. Ce schéma n'est qu'illustratif. On a reporté de manière schématique sur la figure 3, la zone de saisie 10 ainsi que le circuit électronique 4 associé à cette zone de saisie 10. On a également représenté des moyens d'affichage, indiqués globalement par la référence numérique 5, et comportant notamment un circuit de commande d'affichage 50 ainsi qu'un dispositif d'affichage 55 tel un affichage à cristaux liquides, ce dernier se présentant typiquement sous la forme d'un affichage matriciel permettant l'affichage d'une pluralité de lignes de caractères et, le cas échéant, l'affichage d'une image du tracé manuel réalisé sur la zone de saisie 10.

La zone de saisie 10 et ses capteurs capacitifs sont reliés à un (par multiplexage) ou plusieurs oscillateurs commandés en tension 41 délivrant en sortie, à un instant donné désigné tₖ, des signaux de fréquence fᵢⱼ(tₖ), les indices i et j étant indicatifs de la position du capteur dans la matrice formant la zone de saisie 10. Un détecteur de fréquence 42 connecté en sortie du ou des oscillateurs commandés en tension 41 permet de déterminer la fréquence du signal produit pour chaque capteur, par exemple par la détermination du nombre de passages par zéro du signal durant une période de mesure déterminée, ce nombre, pour chaque capteur, étant indiqué par la référence Nᵢⱼ(tₖ). Le détecteur de fréquence 42 reçoit typiquement un signal d'horloge produit par des moyens d'horloge 43 et définissant la période de mesure pour la détermination de la fréquence des signaux produits pour chaque capteur. Ces mêmes moyens d'horloge 43 produisent un second signal d'horloge déterminant la fréquence d'échantillonnage des signaux produits par les capteurs de la zone de saisie 10 durant le tracé du caractère.

Le nombre Nᵢⱼ(tₖ) représentatif de la fréquence du signal produit pour chaque capteur de la zone de saisie 10 à l'instant tₖ est transmis à un microcontrôleur 45 chargé de traiter les signaux de saisie du tracé du caractère et de reconnaître ce caractère. Dans ce but, le microcontrôleur 45 exploite des données stockées dans des moyens de mémorisation 46 comprenant typiquement une mémoire vive (RAM), une mémoire morte (ROM), et/ou une mémoire reprogrammable (EEPROM). Les données exploitées par le microcontrôleur 45 comprennent notamment des données relatives aux divers modèles de caractères alphanumériques, symboliques et de commande, ces données étant stockées sous la forme d'une bibliothèque de caractères 460 comme schématisé dans la figure 3.

Dans la figure 3, on a par ailleurs illustré l'introduction d'un texte alphanumérique (dans cet exemple l'introduction du terme "HELLO"). Avantageusement, chaque caractère est successivement introduit au moyen de la zone de saisie 10 et reconnu par le microcontrôleur 45 selon un processus qui sera amplement décrit ci-après. Durant le tracé du caractère sur la zone de saisie, on affiche préférablement sur l'affichage 55 (comme illustré en a)) le tracé manuel du caractère, désigné 100, réalisé sur la zone de saisie 10 (ici le caractère "O") afin d'offrir à l'utilisateur une confirmation du tracé réalisé. Au terme du processus de reconnaissance, le caractère est validé (ou rejeté le cas échéant) et affiché sur le dispositif d'affichage 55 comme illustré en b) sur la figure 3.

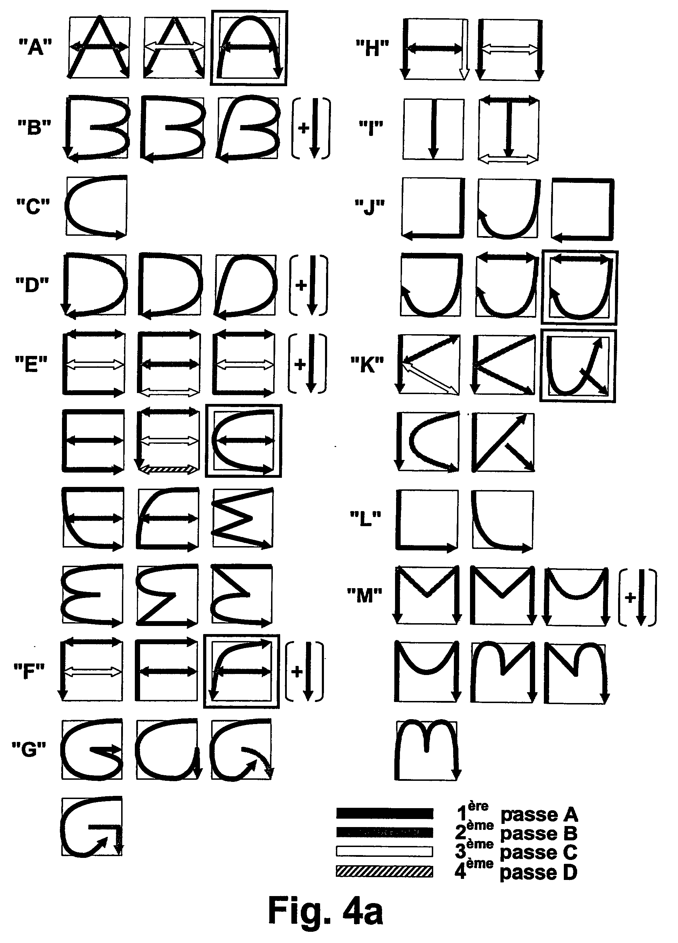

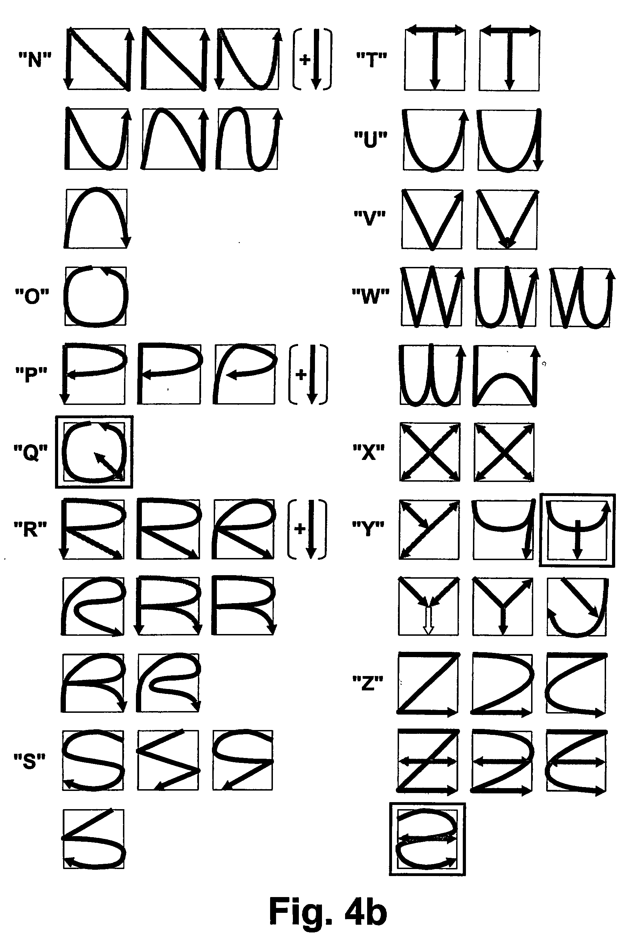

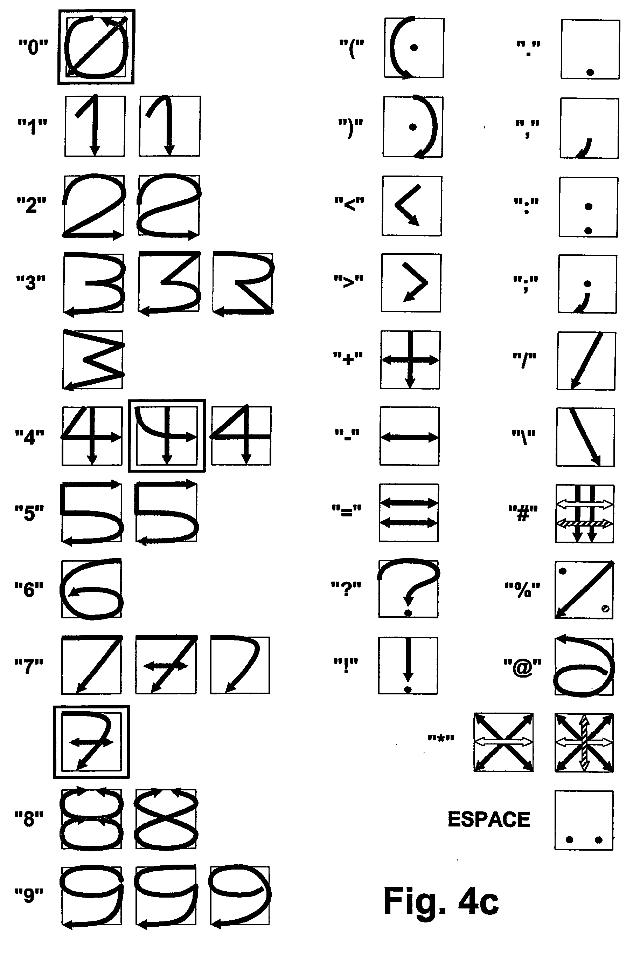

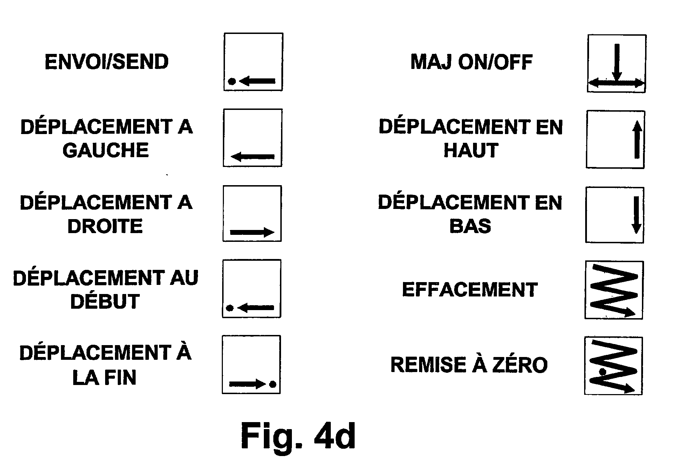

Le fonctionnement du dispositif de reconnaissance de caractères va maintenant être décrit plus en détail en référence aux figures 4 à 10.

Les figures 4a à 4d illustrent de manière schématique et partielle un ensemble de modèles représentatifs de diverses manières avec lesquelles divers caractères alphanumériques, symboliques et de commande peuvent typiquement être tracés sur la zone de saisie 10 dans le cadre de la présente invention. On insistera sur le fait que l'ensemble illustré n'est nullement exhaustif ou limitatif et que d'autres tracés peuvent aisément être envisagés. Ainsi, notamment, le tracé de nombreux caractères alphabétiques tels les caractères "B", "D", "E", "F", "M", "N", "P" ou "R", peut débuter par un premier segment vertical tracé de haut en bas comme schématisé par le segment vertical dirigé vers le bas indiqué entre parenthèses et représenté en regard de chacun de ces caractères.

Les figures 4a et 4b illustrent en particulier des modèles de caractères de l'alphabet, la figure 4c des modèles de caractères numériques et symboliques et la figure 4d des modèles possibles de caractères de commande. Dans toutes ces figures, on a illustré les différentes passes nécessaires au tracé du caractère, désignées A à D, par différentes couleurs ou différents motifs. En particulier, la première passe A est représentée en noir, la seconde passe B en gris, la troisième passe C en blanc, et la quatrième passe D avec des hachures comme cela est indiqué sur la légende de la figure 4a. La flèche dans chaque passe indique la direction de traçage de cette passe, deux flèches opposées indiquant que la passe en question peut être tracée indépendamment dans un sens ou un autre.

En examinant le jeu de caractères illustré dans les figures 4a à 4d, on peut constater le nombre très réduit de caractères nécessitant un apprentissage ou certaines contraintes pour l'utilisateur. Ainsi, les parenthèses ouverte et fermée "(" et ")" sont modélisée avec une passe de nature unidimensionnelle supplémentaire et le caractère "ESPACE" est modélisé par deux passes de nature unidimensionnelle réalisées sensiblement à la même hauteur. Pour le reste, les caractères sont modélisés au plus près de leur(s) tracé(s) naturel(s) typique(s).

D'une manière générale, on constate que la plupart des caractères sont réalisés, dans cet exemple, en une, deux, trois, voire quatre passes. Le caractère "E" ainsi que les caractères symboliques "#" et "*" peuvent par exemple être tracés en quatre passes formées chacune d'un segment rectiligne. A ce titre, si l'on ne prend en compte que des critères topologiques dans un premier temps, les caractères "E", "#" et "*" ont tous trois une définition topologique similaire, c'est-à-dire un ensemble de quatre passes formées chacune d'un unique segment rectiligne. Leur différentiation nécessite notamment la comparaison des orientations angulaires de ces segments rectilignes, l'une des caractéristiques du caractère "E" par rapport aux caractères "#" et "*" étant la présence de trois segments rectilignes horizontaux.

Selon la présente invention, on regroupera préférablement les divers modèles tout d'abord selon le nombre de passes. Chacune de ces catégories est ensuite décomposée selon la nature et la composition de ces passes. Dans le cas d'une passe unidimensionnelle (un point), le modèle comprend également préférablement des paramètres géométriques concernant la position de cette passe unidimensionnelle. Dans le cas d'une passe bidimensionnelle (un ou plusieurs segments), le modèle comprend également préférablement des paramètres géométriques concernant la ou les orientations angulaires de chaque segment, et, pour chaque segment courbe, au moins un paramètre topologique relatif au sens de rotation du segment courbe (trigonométrique ou non-trigonométrique, voire mixte). Une arborescence est ainsi formée qui permet d'aboutir au final à un modèle particulier d'un caractère.

Au-delà d'un nombre déterminé de passes on pourra typiquement admettre que le tracé effectué par l'utilisateur sur la zone de saisie ne correspond pas à un caractère alphanumérique, symbolique ou de commande mais correspond à un caractère non défini. Par exemple, il n'existe typiquement aucun caractère, dans le jeu de caractères latins, qui soit réalisé naturellement en plus de quatre passes. De même, on pourra admettre que le tracé d'un caractère comportant une passe formée d'un nombre de segments supérieur à une limite déterminée correspond à un caractère non défini ou, avantageusement, à un caractère de commande spécifique. Il est par exemple possible de définir un certains nombre de caractère de commande spécifiques ayant une définition topologique univoque, c'est-à-dire des caractères qui ne nécessitent pas de paramètres géométriques pour permettre leur reconnaissance. Ainsi, on peut par exemple avantageusement définir un premier caractère de commande spécifique par un modèle formé, par exemple, d'une unique passe comprenant plus de cinq segments successifs, ou un second caractère de commande spécifique par une première passe comprenant plus de cinq segments successifs suivie d'une seconde passe comprenant un point comme illustré dans la partie droite de la figure 4d.

Selon l'invention, on fait avantageusement la distinction entre la nature uni- ou bidimensionnelle de chaque passe. Un point pourra ainsi rapidement être différencié d'un segment ou de plusieurs segments successifs (rectilignes ou courbes) si l'on détecte un tracé très localisé contenu dans une zone d'aire réduite. Dans une certaine mesure, on pourra rapidement réduire le champ de recherche d'un caractère tracé dès l'apparition d'une passe reconnue comme étant un point, cette caractéristique n'étant présente que dans un nombre réduit de caractères, ces derniers étant essentiellement des caractères de ponctuation, des caractères symboliques ou des caractères de commande.

De même, par la différentiation entre un segment de nature rectiligne ou courbe, on pourra rapidement réduire le champ de recherche en ne sélectionnant que les modèles possédant des caractéristiques similaires. Cette sélection peut encore être affinée en tenant compte, le cas échéant, du sens de rotation de chaque segment courbe, pour autant que le caractère tracé comporte un segment de telle nature.

On constatera aisément l'efficacité de l'approche proposée selon la présente invention. En effet, les critères topologiques permettent de modéliser efficacement tous les caractères avec un nombre réduit d'informations et ceci souvent de manière univoque. Comme on le verra ultérieurement, les paramètres géométriques d'évolution de l'orientation angulaire et, le cas échéant, de position ne sont utilisés qu'en dernier lieu pour différencier les candidats restants.

Un premier aspect de l'invention nécessite ainsi la constitution d'un catalogue ou jeu de modèles pour chaque caractère susceptible d'être tracé par l'utilisateur, chaque modèle étant représentatif d'au moins une manière de tracer le caractère en question, un tel jeu étant par exemple illustré dans les figures 4a à 4d. On notera que plus d'un jeu de caractères peuvent être définis. Ainsi, on peut envisager de créer des jeux de caractères distincts pour les caractères alphabétiques, numériques et symboliques par exemple afin de réduire les risques d'erreur d'interprétation entre des caractères présentant une topologie similaire.

Selon un autre aspect de l'invention, il est également nécessaire de traiter les signaux produits par les divers capteurs formant la zone de saisie afin d'extraire des données permettant de constituer un modèle du caractère tracé comprenant lui aussi des informations ou paramètres concernant sa topologie et sa géométrie. Ce caractère est donc typiquement échantillonné durant toute la période nécessaire à son tracé.

La figure 5 montre la disposition des capteurs de la figure 2 sur laquelle, à titre d'exemple, le tracé manuel, désigné 100, réalisé par le doigt 13 représentant le caractère "A" a été symbolisé par deux flèches. En suivant ce tracé, on constate par exemple que le doigt 13 à d'abord effectué une première passe, désignée A, pour effectuer une première partie du caractère, c'est-à-dire la partie de forme concave du caractère "A" (ici sous la forme d'un segment courbe en U inversé), puis une seconde passe, désignée B, pour effectuer le tracé de la barre sensiblement horizontale du caractère "A". Cet exemple correspond à un tracé manuel naturel et typique d'un droitier du caractère "A". On notera néanmoins que ce même caractère peut être tracé d'autres manières, par exemple en une première passe se présentant sous la forme d'un V inversé puis une seconde passe constituée d'un segment rectiligne horizontal, voire en trois passes comme illustré dans la figure 4a.

Selon le type de zone de saisie et le nombre et la nature des capteurs la formant, il sera ou non nécessaire de pratiquer un traitement préalable du signal avant de procéder à l'extraction des données nécessaires à la reconnaissance. Dans l'exemple non limitatif utilisé de manière illustrative dans le cadre de la présente description, la zone de saisie est formée d'une matrice de quatre par quatre capteurs capacitifs discrets connectés chacun à un oscillateur commandé en tension (comme décrit plus haut) et produisant un signal électrique dont la fréquence varie en fonction du degré de couverture de chaque capteur par le doigt. Dans l'exemple illustré à la figure 5, compte tenu de la taille des capteurs, on ne peut donc bien évidemment se contenter d'examiner uniquement si chaque capteur est ou non activé. On utilisera donc préférablement la dépendance de la fréquence du signal de sortie vis-à-vis du degré de couverte des capteurs par le doigt pour déterminer de manière plus fine la position du doigt sur la zone de saisie.

Typiquement, compte tenu des dimensions de la zone de saisie, plusieurs capteurs seront simultanément activés. Pour chacun de ces capteurs activés, on détermine ainsi en temps réel une position moyenne du doigt sur la zone de saisie en procédant au calcul du centre de gravité ou barycentre des capteurs activés et ceci préférablement en leur attribuant un poids plus ou moins élevé selon le degré de couverture de ces capteurs par le doigt, ce poids étant maximum lorsque le doigt couvre un capteur sur toute sa surface, et minimum lorsque seule une petite partie de ce capteur est couverte.

Après échantillonnage du caractère, il peut ou non être nécessaire de traiter en outre le signal et notamment filtrer le bruit que l'on constate typiquement lors de l'acquisition de telles données. En particulier, il sera préférable d'appliquer des techniques de filtrage et de lissage pour sensiblement supprimer le bruit et lisser le tracé du caractère, et ceci bien évidemment sans altérer les caractéristiques essentielles du tracé du caractère. On ne décrira pas ici ces diverses techniques de filtrage et de lissage qui sont amplement connues et à la portée de l'homme du métier.

Suite à l'échantillonnage et, le cas échéant, au traitement préalable du signal, il s'agit de détecter dans un premier temps le nombre de passes employées par l'utilisateur pour tracer le caractère. Ce nombre de passes est aisément déterminé en détectant le nombre d'interruptions durant le tracé du caractère, c'est-à-dire l'apparition d'une période de durée déterminée (typiquement plusieurs périodes d'inactivité successives) durant laquelle aucun des capteurs n'a été activé par la présence du doigt, la fin du tracé du caractère étant détectée de manière similaire mais sur la base d'une période d'inactivité plus longue. Une première sélection de candidats peut alors être effectuée sur la base du nombre de passes.

Il s'agit ensuite de déterminer la nature générale de chacune des passes, à savoir notamment si la passe est de nature unidimensionnelle (un point) ou de nature bidimensionnelle (un ou plusieurs segments successifs). Ceci est également aisément déterminé en examinant si l'ensemble des échantillons pour une passe donnée est concentré dans une zone réduite déterminée, auquel cas on part du principe qu'il s'agit du tracé d'un point et on détermine sa position, désignée P₀. Si l'ensemble des échantillons s'étend sur une zone plus étendue, on procède alors à ce que l'on pourra dénommer une étape de segmentation qui consiste à examiner chaque passe afin de déterminer le nombre de segments la composant, la nature rectiligne ou courbe de ces segments et leur géométrie (orientation angulaire et position).

Afin de procéder à cette segmentation, on analyse préférablement l'évolution de l'orientation angulaire du tracé de chaque passe et on détecte notamment les changements brusques de cette orientation angulaire, ou points de rebroussement, ces changements brusques indiquant l'apparition d'un autre segment. Il s'agit ici de procéder à la dérivée du tracé (l'orientation angulaire du segment étant développée), ou plus exactement au calcul de la pente de chaque segment élémentaire formé par deux échantillons successifs du signal. Un point de rebroussement pourra aisément être identifié comme étant l'apparition d'une différence d'orientation angulaire importante (supérieure à une limite déterminée, par exemple 90°) entre deux segments élémentaires successifs.

A titre de variante avantageuse, on peut regrouper des segments de même nature si leur extrémités sont proches afin d'éviter d'éventuelles erreurs liées à un soulèvement inopportun du doigt. Il est également envisageable de supprimer certains segments de longueurs trop réduite en début et fin de passe afin de ne pas tenir compte des petits mouvements non significatifs lorsque l'on pose ou soulève le doigt.

La nature rectiligne ou courbe de chaque segment est par exemple déterminée par approximation linéaire de chaque segment par une méthode conventionnelle des moindres carrés connues de l'homme du métier. Si l'écart entre ce modèle d'approximation linéaire est supérieur à un écart déterminé, on part du principe que le segment en question est de nature courbe et on détermine par exemple les orientations angulaires de départ et d'arrivée φ₁, φ₂ de ce segment. On détermine en outre préférablement, dans ce cas, le sens de rotation w du segment courbe. Sinon, on part du principe que ce segment est de nature rectiligne et on détermine son orientation angulaire φ. On procède préférablement en outre à la détermination de la position des points extrêmes de chaque segment, désignés P₁ et P₂.

A partir des données topologiques et, si nécessaire, des données géométriques ainsi déterminées, on procède alors à l'identification du caractère parmi l'ensemble des candidats possibles.

Dans l'illustration de la figure 5, il sera ainsi procédé à l'identification de deux passes A et B, comprenant, pour la première, un unique segment de nature courbe comprenant une orientation angulaire de départ φ₁ d'environ +90° et une orientation angulaire d'arrivée φ₂ d'environ -90°, ceci avec un sens de rotation w strictement non-trigonométrique, et, pour la deuxième, un unique segment de nature rectiligne comprenant une orientation angulaire φ légèrement supérieure à 0° compte tenu de l'inclinaison de ce segment dans l'illustration de la figure 5. Etant donné qu'il n'existe typiquement aucun autre caractère similaire en termes de topologie et d'orientation angulaire, on notera que les données de position des extrémités des segments ne sont pas utiles dans le cas du tracé du caractère "A".

En examinant, l'ensemble des caractères défini à titre illustratif dans les figures 4a à 4d, on peut constater que les caractères répondant à la même topologie que celle du tracé du caractère "A" illustré en figure 5, à savoir une première passe comprenant un unique segment courbe et une seconde passe comprenant un unique segment rectiligne, se limitent aux caractères "A", "E", "F", "J", "K", "Q", "Y", "Z", "0", "4", "7", cette similitude en terme de topologie étant indiquée par un encadré autour des modèles concernés dans les figures 4a à 4c. En tenant compte du sens de rotation du segment courbe (ici non-trigonométrique), on peut rejeter les candidats "E", "K", "Q", "Y", "Z", "0" et "4" (dans le cas spécifique d'un jeu de caractères pour droitiers). La comparaison des orientations angulaires des segments permettra d'écarter sans équivoque tous les candidats à l'exception du modèle du caractère "A".

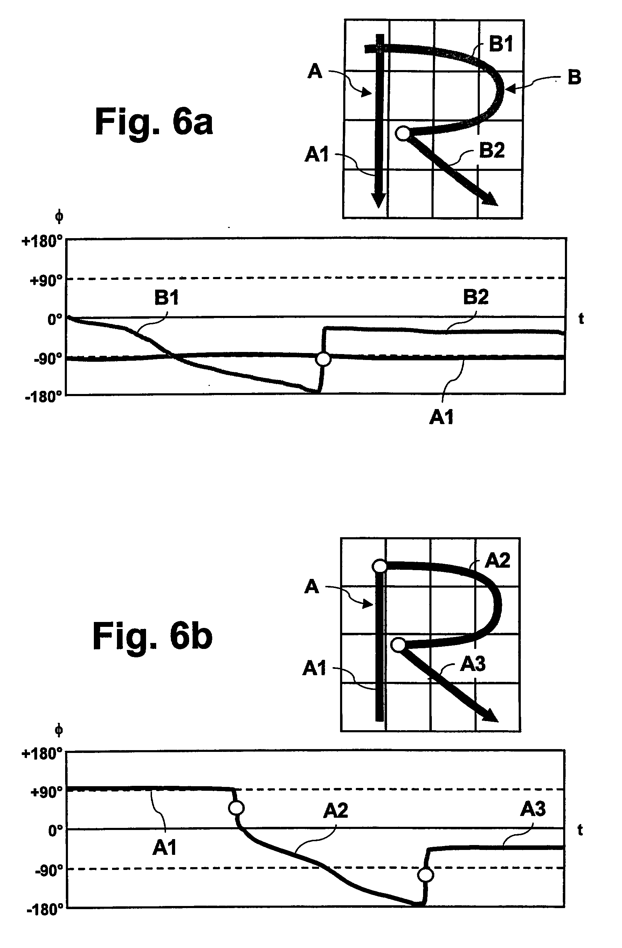

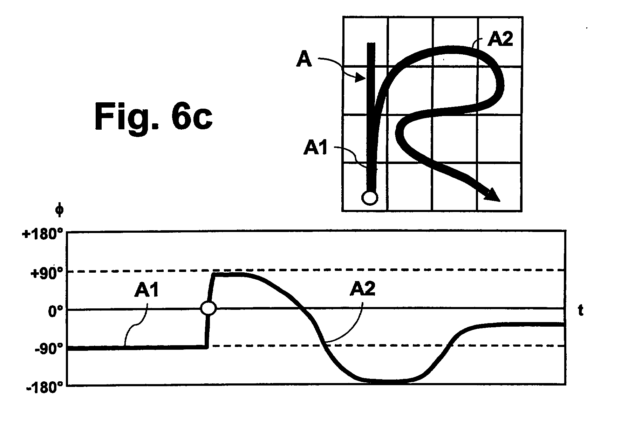

Les figures 6a à 6c montrent, à titre de comparaison trois exemples de tracés du caractère "R", la figure 6a illustrant un tracé en deux passes et les figures 6b et 6c illustrant un tracé en une unique passe. Sur chacune de ces figures sont représentés une illustration schématique du caractère tracé sur la zone de saisie et un diagramme montrant l'évolution de l'orientation angulaire des tangentes au tracé de chaque passe sur une période de temps normalisée. Les points de rebroussement coïncidant avec un changement brusque d'orientation angulaire sont schématisés par un point dans les figures. Il convient d'insister à nouveau sur le fait que les figures 6a à 6c ne sont pas exhaustives des possibilités pouvant être adoptées pour tracer le caractère "R".

Sur la figure 6a, on voit un caractère "R" tracé en deux passes désignées A et B respectivement. La première passe A est constituée d'un segment rectiligne A1 sensiblement vertical tracé de haut en bas et possédant en conséquence une orientation angulaire φ de -90° environ. La seconde passe B est constituée de deux segments successifs, respectivement un segment courbe B1 suivi d'un segment rectiligne B2 tous deux tracés de haut en bas. Le segment courbe B1 possède des orientations angulaires de départ φ₁ et d'arrivée φ₂ respectivement égales à 0° et -180° environ, le sens de rotation étant non-trigonométrique. Le segment rectiligne B2 possède quant à lui une orientation angulaire φ d'environ -45°. La différentiation entre les deux segments B1 et B2 de la seconde passe B peut aisément être effectuée du fait que l'on constate une variation brusque de l'orientation angulaire (de -180° à -45°) au terme du tracé de la partie courbe du "R" avant le tracé de la dernière portion rectiligne.

En se référant au diagramme de l'évolution de l'orientation angulaire dans la figure 6a, on voit que la passe A et son unique segment A1 se traduit par une droite sensiblement horizontale située approximativement à -90°. La passe B se traduit quant à elle par une première portion similaire, en première approximation, à une portion de droite de pente négative entre 0° et -180° environ et correspondant au segment courbe B1, suivie d'une portion de droite sensiblement horizontale située aux environs de -45° et correspondant au segment rectiligne B2. Le changement brusque d'orientation angulaire entre les segments B1 et B2 ressort clairement de ce diagramme.

La figure 6b illustre un tracé du caractère "R" réalisé en une unique passe A, soit un segment rectiligne A1 à environ +90°, suivi d'un segment courbe A2 variant de 0° à -180° environ et finalement un segment rectiligne A3 à environ -45°. Dans le diagramme de l'évolution de l'orientation angulaire de la passe A, on constate ainsi une première portion de droite sensiblement horizontale à environ +90°, suivie, en première approximation, d'une seconde portion de droite de pente négative entre 0° et -180° environ, et finalement une troisième portion de droite sensiblement horizontale à environ -45°.

La figure 6c illustre une autre possibilité de tracer le caractère "R" en une unique passe A, cette passe A comprenant un premier segment rectiligne A1 à environ -90°, suivi d'un segment courbe A2 variant de +90° à -45° environ avec un sens de rotation mixte, c'est-à-dire une courbe dont l'orientation angulaire diminue tout d'abord de +90° à -180° environ puis augmente de -180° à -45° approximativement. On notera à nouveau que le segment courbe A2 de sens de rotation mixte peut alternativement être décomposé en deux segments courbes successifs de sens de rotation non-trigonométrique puis trigonométrique.

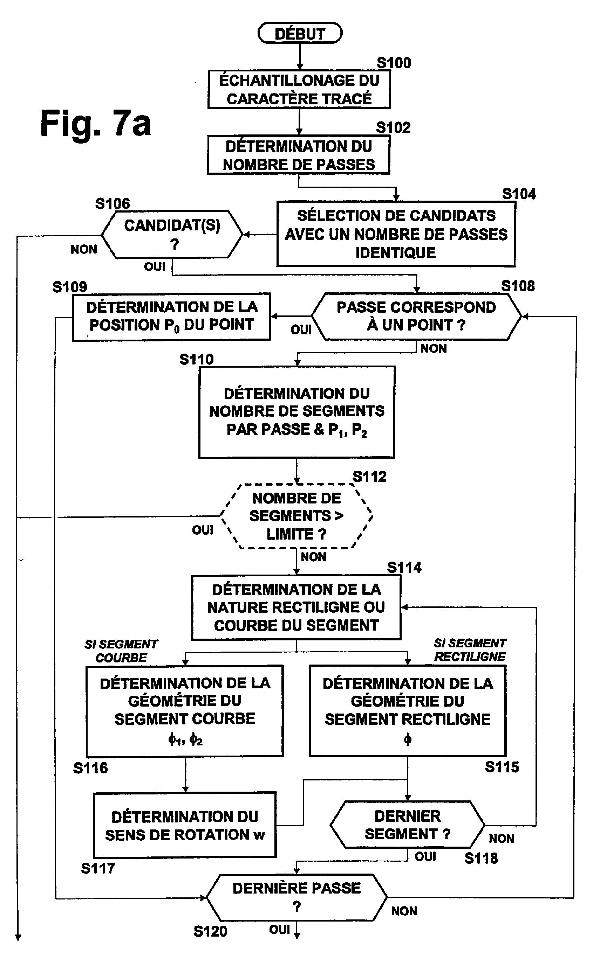

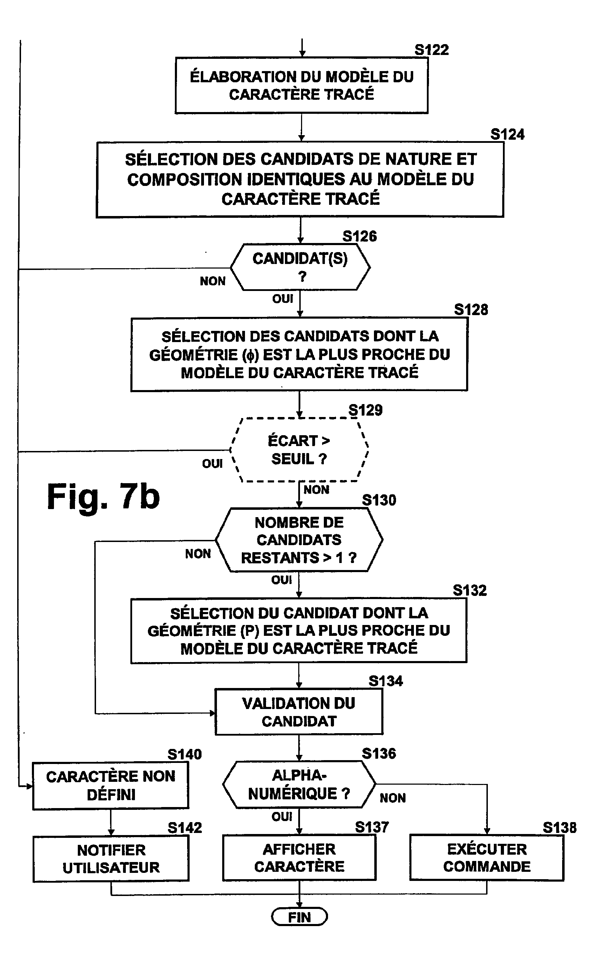

Au moyen des figures 7a et 7b, on décrira maintenant un exemple de mise en oeuvre du procédé de reconnaissance de caractères selon la présente invention. La figure 7a décrit une première partie d'un organigramme illustrant ce mode de mise en oeuvre du procédé selon l'invention, la seconde partie de cet organigramme étant reportée sur la figure 7b.

Comme déjà mentionné, le procédé commence à l'étape S100 par l'échantillonnage du caractère tracé, cet échantillonnage comprenant un éventuel traitement préalable du signal si nécessaire.

A l'étape S102, on détermine le nombre de passes réalisées pour effectuer le tracé du caractère, ce nombre permettant une sélection d'un premier ensemble de candidats comprenant un nombre de passes identiques comme schématisé à l'étape S104.

Si des candidats sont sélectionnés (étape S106), on commence à déterminer la nature puis la composition de chaque passe comme schématisé par les étapes S108 à S120, sinon on part du principe que le caractère n'est pas défini et l'on notifie ce fait à l'utilisateur comme illustré par les étapes S140 et S142 de l'organigramme sur la figure 7b.

A l'étape S108, on détermine tout d'abord la nature unidimensionnelle ou bidimensionnelle de chaque passe, à savoir s'il s'agit d'un point ou d'un nombre de segments successifs. Si cette passe est un point, on détermine la position de ce point à l'étape S109, sinon, on débute la segmentation de la passe en question comme illustré par les étapes S110 à S118 qui sont répétées autant de fois qu'il y a de segments dans la passe en question.

A l'étape S110, on procède ainsi à la détermination du nombre de segments composant la passe, par exemple par la détermination des changements brusques de orientations angulaires dans la passe comme déjà mentionné, la détermination des positions P₁, P₂ des extrémités des segments étant effectuée à cette étape. Comme illustré par l'étape S112, on peut avantageusement interrompre le processus de reconnaissance par les étapes S140 et S142 si le nombre de segments est supérieur à une limite déterminée qui montre que le tracé ne correspond à aucun caractère défini. Si tel n'est pas le cas, on détermine à l'étape S114 la nature rectiligne ou courbe de chaque segment, par exemple par approximation linéaire de chaque segment et sélection en fonction de l'écart entre cette approximation linéaire et le tracé du segment en question. En fonction de la nature rectiligne ou courbe du segment on détermine respectivement l'orientation angulaire φ du segment rectiligne à l'étape S115 ou les orientations angulaires de départ et d'arrivée φ₁, φ₂ du segment courbe à l'étape S116. Si le segment est de nature courbe, on complète les informations topologiques par la détermination du sens de rotation w du segment courbe comme schématisé par l'étape S117. Ce processus est répété pour chaque segment et pour chaque passe comme illustré par les étapes S118 et S120.

Au terme de ces étapes, on dispose des informations nécessaires pour élaborer à l'étape S122 un modèle du caractère tracé qui peut être utilisé pour sélectionner les candidats potentiels et au final identifier le caractère tracé. A l'étape S124, on procède ainsi à la sélection d'un second ensemble de candidats parmi les candidats du premier ensemble déterminé à l'étape S104 dont la nature et la composition des passes sont identiques à celles modèle du caractère tracé. Il n'est pas nécessaire, à ce stade, de considérer pour l'instant les informations d'ordre géométrique des modèles, à savoir les paramètres d'évolution de l'orientation angulaire ou de position des segments.

Au terme de cette sélection, on peut alors identifier, à l'étape S126, si le caractère tracé correspond à un modèle défini ou si ce modèle est inconnu auquel cas le second ensemble ne comporte aucun candidat.

Dans le cas où le second ensemble comprend un ou plusieurs candidats, on procède, à l'étape S128, à la sélection d'un troisième ensemble de candidats parmi les candidats du second ensemble dont la géométrie en terme d'orientation angulaire est la plus proche de celle du modèle du caractère tracé. Pour ce faire, on détermine par exemple l'écart en terme d'orientation angulaire entre les segments constituant chaque passe et on sélectionne le ou les meilleurs candidats possédant l'écart le plus faible. En pratique, on admettre une certaine tolérance sur ces orientations angulaires (par exemple ±10°).

A l'étape S129, on peut avantageusement rejeter le ou les candidats si l'écart en terme d'orientation angulaire est trop important, ceci signifiant que le caractère tracé n'est pas défini. Le processus se termine alors par les étapes S140 et S142. Si le ou les candidats sont jugés suffisamment fidèles au caractère tracé, on détermine tout d'abord, à l'étape S130, si plus d'un candidat ont été sélectionnés à ce stade, auquel cas on sélectionne, à l'étape S132, le candidat parmi les candidats du troisième ensemble dont la géométrie en terme de position (absolue ou relative) des segments est la plus proche de celle du modèle du caractère tracé, puis on valide ce candidat à l'étape S134. Si le troisième ensemble ne comprend qu'un candidat à l'étape S130, on valide directement ce dernier à l'étape S134 comme illustré.

Au terme de l'étape de validation S134, on a ainsi reconnu et validé le caractère tracé et on peut en conséquence afficher ce caractère s'il s'agit d'un caractère alphanumérique (ou symbolique) ou exécuter la commande associée s'il s'agit d'un caractère de commande comme illustré par les étapes S136, S137 et S138.

On comprendra que l'organigramme illustré dans les figures 7a et 7b ne constitue qu'un mode de mise en oeuvre particulier de l'invention et que diverses modifications, telle la redistribution de certains tests en amont ou en aval dans l'organigramme, et/ou améliorations peuvent y être apportées. Ainsi, les étapes S112 et S129 dans les figures 7a et 7b qui consistent à interrompre le processus de reconnaissance respectivement si le nombre de segments composant une passe est supérieur à une limite déterminée ou si l'écart en terme d'orientation angulaire entre le ou les candidats et le modèle du caractère tracé est supérieur à une valeur limite peuvent être omises. Ces étapes permettent toutefois avantageusement d'éviter un travail de recherche inutile ou d'éviter une interprétation erronée d'un caractère. On constate ainsi que le procédé de reconnaissance de caractère permet avantageusement d'éviter la reconnaissance erronée d'un caractère et de limiter en conséquence les erreurs d'introduction de données dans le dispositif implémentant ce procédé. Le procédé selon l'invention est par ailleurs très indépendant de la forme exacte du tracé manuel du caractère, la reconnaissance étant essentiellement basée sur les tendances du tracé lors de son établissement.

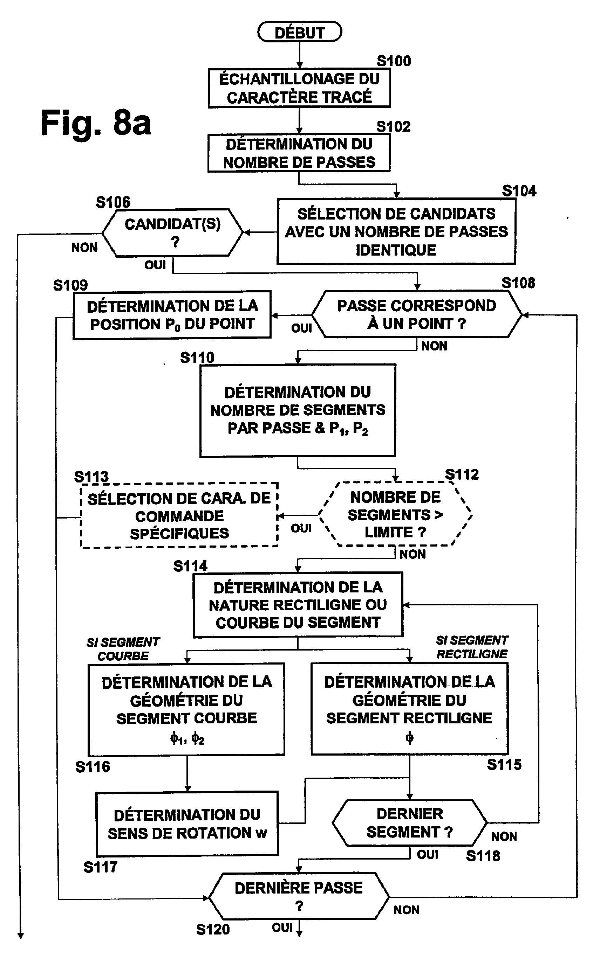

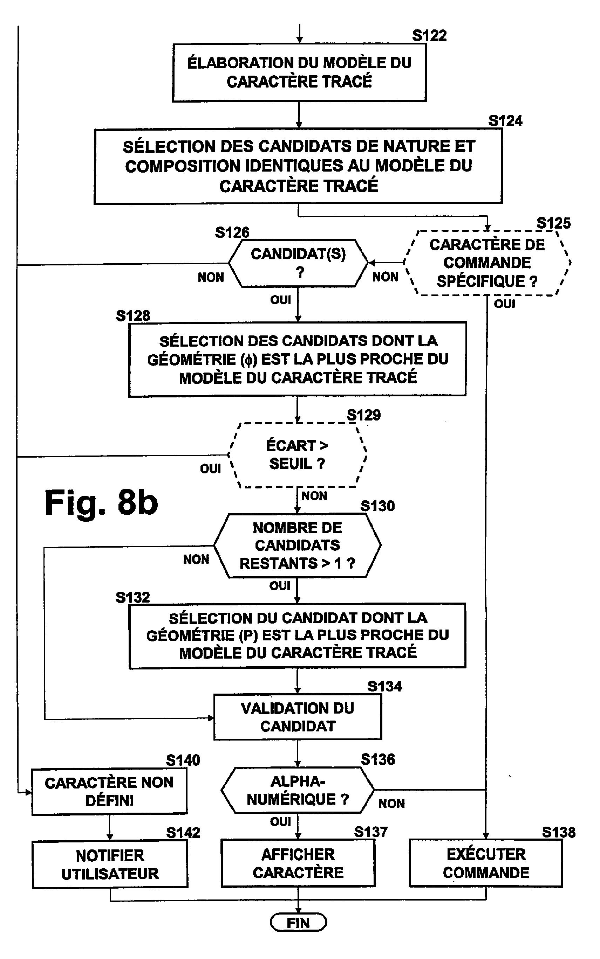

Comme illustré dans les figures 8a et 8b, le mode de mise en oeuvre illustré aux figures 7a et 7b peut être avantageusement modifié de manière à comprendre des étapes supplémentaires permettant l'identification de caractères de commande spécifiques auxquels sont associées des commandes particulières. Ces caractères de commande spécifiques sont avantageusement décrits de manière univoque uniquement par des informations ou paramètres d'ordre topologique.

A titre d'exemple, un tracé d'une passe comprenant plus d'un certain nombre de segments successifs (par exemple au moins cinq) peut être considéré comme le tracé d'un caractère de commande spécifique auquel est associé une commande spécifique comme illustré dans la figure 4d (par exemple l'effacement d'un caractère précédemment introduit ou la réinitialisation complète des données introduites). Etant donné qu'aucun autre caractère ne peut être tracé de cette manière (pour autant toutefois qu'il n'ait pas été défini de la sorte), il n'est pas nécessaire de procéder à la détermination de la nature rectiligne ou courbe de segments, ni à la détermination des paramètres géométriques de ces segments.

En se référant ainsi aux figures 8a et 8b, on peut ainsi prévoir une étape additionnelle S113 suivant l'étape S112 visant à déterminer le nombre de segments par passe, cette étape additionnelle S113 consistant à restreindre le premier ensemble de candidats déterminés à l'étape S104 à un ensemble de caractères de commande spécifique, auquel cas ni la nature rectiligne ou courbe des segments, ni la géométrie de ces segments ne sont déterminées aux étapes S114 à S116. Une autre étape additionnelle S125 est alors prévue suite à l'étape de sélection S124 du second ensemble de candidat, cette étape S125 visant à identifier si le candidat correspond à un caractère de commande spécifique, auquel cas la commande associée à ce caractère de commande spécifique est directement exécutée à l'étape S138.

A titre de variante avantageuse, on peut également prévoir une étape additionnelle suivant l'étape S118 dans la figure 7a (ou 8a) ayant pour but de filtrer des segments dont la longueur n'est pas suffisamment significative, ces segments pouvant être considérés comme des hésitations de la part de l'utilisateur.

Encore à titre de variante avantageuse, ou peut également restreindre l'ensemble des candidats sélectionnés, en examinant la position relative approximative des premier et dernier points du tracé ou de chaque passe du caractère. Ainsi, des critères grossiers définissant si une passe débute, respectivement se termine, dans une partie haute ou basse, et/ou dans une partie gauche ou droite du tracé du caractère permet de rejeter d'office certains caractères. Il est par exemple peu réaliste d'envisager un caractère "L" dont le tracé débute dans une partie basse du caractère.

Encore à titre de variante avantageuse, on peut examiner si une passe du tracé du caractère est ouverte ou fermée est restreindre en conséquence le nombre de candidats sur la base de ce critères. Les modèles des caractères devront bien évidemment être défini de la sorte, c'est-à-dire inclure une indication selon laquelle une passe est fermée ou ouverte.

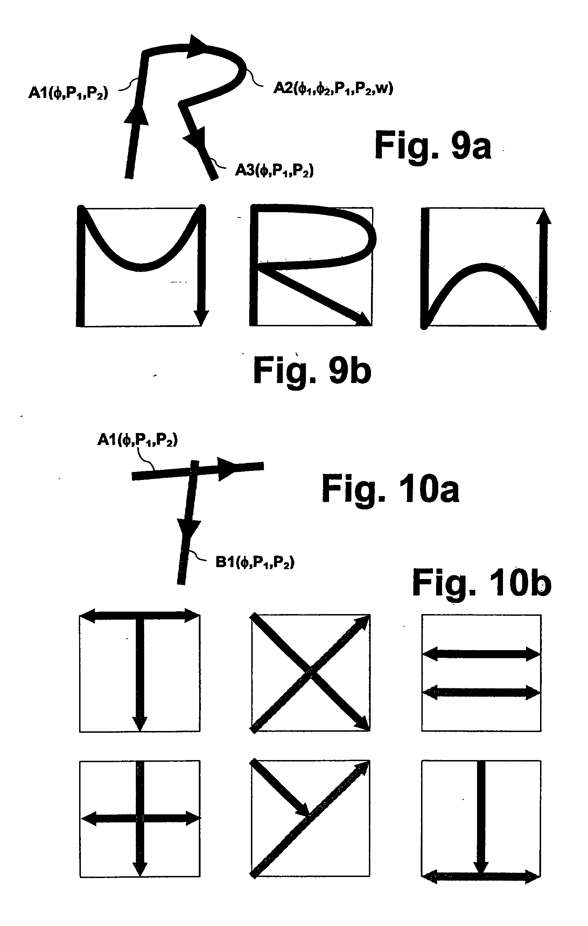

En se référant à nouveau aux figures 7a et 7b et additionnellement aux figures 9a, 9b et 10a, 10b, on va maintenant présenter divers exemples illustrant le fonctionnement du procédé de reconnaissance de caractères selon l'invention lors du tracé d'un caractère.

La figure 9a montre un exemple du caractère "R" tracé sur la zone de saisie. Dans cet exemple, le caractère est tracé en une unique passe A sous la forme d'un premier segment rectiligne A1 suivi d'un segment courbe A2 et d'un second segment rectiligne A3. En appliquant le mode de mise en oeuvre décrit en référence aux figures 7a et 7b, un premier ensemble des candidats susceptibles d'être tracés en une passe sera ainsi sélectionné à l'étape S104. La nature rectiligne ou courbe des trois segments A1 à A3 de cette unique passe ainsi que leurs données géométriques d'orientation angulaire et de position seront alors déterminées aux étapes S110 à S120 conformément à ce qui a déjà été mentionné.

A titre d'exemple uniquement, on admettra que le premier segment rectiligne A1 possède une orientation angulaire φ de +80° environ, que le segment courbe A2 possède une orientation angulaire de départ φ₁ d'environ +10° et une orientation angulaire d'arrivée φ₂ d'environ -170°, et que le second segment rectiligne A3 possède une orientation angulaire φ de -60° environ. Le segment courbe A2 est en outre tracé avec un sens de rotation non-trigonométrique. Un modèle du caractère tracé formé de ces caractéristiques est alors élaboré à l'étape S122. Les orientations angulaires des segments du caractère tracé peuvent être résumées comme suit :

| **CARACTÈRE TRACÉ** | **PASSE A** | | | |
|---|---|---|---|---|
| | A1 (φ) | A2(φ₁,φ₂) | | A3(φ) |
| R | +80° | +10° | -170° | -60° |

Durant l'étape S124 on procède à la sélection de tous les candidats dont la nature et la composition sont identiques au modèle du caractère tracé, c'est-à-dire tous les modèles définis comme étant réalisés en une passe formée de trois segments successifs comprenant un premier segment de nature rectiligne, un second segment de nature courbe et un troisième segment de nature rectiligne, dans cet ordre. A titre d'exemple illustratif, les modèles du caractère "M", du caractère "R" et du caractère "W" définis dans le jeu de caractères des figures 4a et 4b sont reportés sur la figure 9b (ces modèles ont bien évidemment été préalablement définis de la sorte). Ces candidats présentent la même topologie (sans considérer le sens de rotation du segment courbe) que le caractère tracé dans la figure 9a, soit un premier segment de nature rectiligne, suivi d'un second segment de nature courbe, puis un troisième segment de nature rectiligne. D'autres modèles pourraient exister le cas échéant, mais ceux-ci n'ont pas été représentés par souci de simplification.

Les orientations angulaires des segments des modèles des caractères "M", "R" et "W" peuvent, entre autres exemples, avoir été définies comme suit :

| **CANDIDATS** | **PASSE A** | | | |
|---|---|---|---|---|
| | A1 (φ) | A2 (φ₁, φ₂) | | A3(φ) |
| "M" | +90° | -90° | +90° | -90° |
| "R" | +90° | 0° | -180° | -45° |
| "W" | -90° | +90° | -90° | +90° |

Par l'adjonction du critère topologique additionnel concernant le sens de rotation w des segments courbes, on rejette le candidat "M", ce dernier présentant un segment courbe de sens de rotation trigonométrique, contrairement aux candidats "R" et "W".

Au terme de l'étape de sélection S124, si l'on considère le sens de rotation du segment courbe A2, on dispose ainsi au moins de deux candidats susceptibles de correspondre au caractère tracé, à savoir les candidats "R" et "W". On a néanmoins écarté une très grande majorité des candidats sur la base de seules considérations topologiques.

Le processus de reconnaissance se poursuit ensuite à l'étape S128 par la sélection du ou des candidats dont la géométrie en terme d'orientation angulaire est la plus proche de celle du modèle du caractère tracé. Ainsi, en déterminant par exemple l'écart d'orientation angulaire de chaque segment par rapport à chaque candidat, on détermine le candidat le plus fidèle en terme d'orientation angulaire.

On constate aisément en comparant les orientations angulaires des candidats "R" et "W", que le caractère tracé à la figure 9a est plus fidèlement représenté par le modèle du "R". Bien que les orientations angulaires des segments du caractère tracé ne soient pas strictement identiques au modèle du caractère "R", elles sont néanmoins sensiblement et suffisamment différentes des orientations angulaires des segments du modèle du caractère "W". Cette différence importante permet d'écarter aisément le candidat "W" et de ne conserver que le modèle du caractère "R". Au final, le modèle du caractère "R" est alors validé. On constate également que le candidat "M" pourrait être écarté de manière similaire, même si l'on n'avait pas examiné le sens de rotation w du segment courbe A2.

La figure 10a montre un exemple du caractère "T" tracé sur la zone de saisie. Dans cet exemple, le caractère est tracé en une première passe comprenant un premier segment rectiligne A1 suivie d'une seconde passe B comprenant un second segment rectiligne B1. En appliquant à nouveau le mode de mise en oeuvre décrit en référence aux figures 7a et 7b, un premier ensemble des candidats susceptibles d'être tracés en deux passes successives sera ainsi sélectionné à l'étape S104. La nature rectiligne des deux segments A1 à B1 ainsi que leurs données géométriques d'orientation angulaire (et de position) seront alors déterminées aux étapes S110 à S120 conformément à ce qui a déjà été mentionné. Les passes peuvent bien évidemment être inversée.

A titre d'exemple uniquement, on admettra que le premier segment rectiligne A1 possède une orientation angulaire φ de +5° environ, et que le segment rectiligne B1 possède une orientation angulaire φ de -95° environ. Un modèle du caractère tracé formé de ces caractéristiques est alors élaboré à l'étape S122. Les orientations angulaires des segments du caractère tracé peuvent être résumées comme suit :

| **CARACTÈRE TRACÉ** | **PASSE A** | **PASSE B** |
|---|---|---|
| | A1(φ) | B1(φ) |
| T | +5° | -95° |

Durant l'étape S124 on procède à la sélection de tous les candidats dont la nature et la composition sont identiques au modèle du caractère tracé, c'est-à-dire tous les modèles définis comme étant réalisés en deux passes formées chacune d'un unique segment de nature rectiligne. A titre d'exemple illustratif, on a représenté dans la figure 10b cinq candidats répondant à cette définition (ces modèles ont bien évidemment été préalablement définis de la sorte). La figure 10b montre ainsi les modèles des caractères "T", "X", "Y", "+" et "=" ainsi que le caractère de commande "MAJ ON/OFF" (commutation entre majuscules/minuscules) présentant la même topologie, soit une première passe comprenant un unique segment de nature rectiligne, suivi d'une seconde passe comprenant également un unique segment de nature rectiligne. D'autres modèles pourraient exister, le cas échéant, mais ceux-ci n'ont pas été représentés par souci de simplification.

Les orientations angulaires des segments des modèles des caractères "T", "X", "Y", "+", "=" et "MAJ ON/OFF" peuvent, entre autres exemples, avoir été définies comme suit (les segments horizontaux peuvent en règle générale être tracés de gauche à droite ou de droite à gauche) :

| **CANDIDATS** | **PASSE A** | **PASSE B** |
|---|---|---|
| | A1 (φ) | B1 (φ) |
| "T", "+" | 0°/±180° | -90° |
| "X", "Y" | -45° | -135° |
| "=" | 0°/±180° | +0°/±180° |
| "MAJ ON/OFF" | -90° | 0°/±180° |

Au terme de l'étape de sélection S124, on dispose ainsi au moins de cinq candidats susceptibles de correspondre au caractère tracé. On a néanmoins écarté une très grande majorité des candidats sur la base de seules considérations topologiques.

Dans ce cas de figure, on constate aisément, en comparant les orientations angulaires de chaque segment des modèles illustrés dans la figure 10b avec les orientations angulaires du modèle du caractère tracé de la figure 10a, que ce dernier est plus fidèlement représenté par le modèle du caractère "T" ou le modèle du caractère "+" et que l'on peut aisément écarter les modèles des caractères "X", "Y", "=" et "MAJ ON/OFF". On constate néanmoins également que les paramètres géométriques d'orientation angulaire ne permettent pas de distinguer, à elles seules, à l'étape S128, lequel des candidats "T" ou "+" est le plus approprié.

Comme déjà décrit, le processus continue à l'étape S132 de la figure 7b durant laquelle on sélectionne le candidat dont la géométrie en terme de position est la plus proche de celle du modèle du caractère tracé. Pour ce faire, on peut se contenter d'utiliser et comparer la position des passes (voire des extrémités des segments) des candidats avec la position des passes (resp. des extrémités des segments) du modèle du caractère tracé. Dans le cas d'un modèle comprenant une passe de nature unidimensionnelle, c'est-à-dire un point, on comparera directement la position du point en question.

Une solution possible, applicable à tous les caractères, peut consister à déterminer la position de chaque point ou de chaque extrémité des segments formant le caractère dans un référentiel cartésien normalisé, c'est-à-dire un référentiel de type cartésien dont les vecteurs de coordonnées x et y sont normalisés par rapport à la largeur (selon l'axe des coordonnées x) et la hauteur (selon l'axe des coordonnées y) du caractère tracé. La position des extrémités des segments et/ou points formant le caractère peut alors être déterminée dans le référentiel cartésien normalisé ainsi défini.

Dans le cas particulier illustré aux figures 10a et 10b, le candidat "T" peut ainsi aisément être reconnu comme le caractère le plus fidèle au caractère tracé par la détermination de l'écart de position des diverses extrémités des segments, le caractère "T" étant notamment caractérisé par le fait que les extrémités du premier segment A1 se situent sensiblement dans la partie supérieure du caractère.

Le cas de figure qui vient d'être présenté et qui surgit lors du tracé du caractère "T" (ou alternativement lors du tracé du caractère "+") se présente de manière similaire pour d'autres caractères. Une telle approche sera par exemple adoptée pour différencier les tracés des caractères "X" et "Y", ou encore les tracés des caractères "D" et "P".

Préférablement, on regroupera ainsi les modèles en une pluralité de familles en fonction de leurs paramètres topologiques et, le cas échéant, de leurs paramètres géométriques d'évolution de l'orientation angulaire, chaque famille comportant un ou plusieurs modèles qui ne peuvent être différenciés des autres modèles de la famille qu'en fonction de leur paramètres géométrique de position, ceci étant le cas des caractère "T" et "+", "X" et "Y", "D" et "P", etc.

Dans ce cas, le procédé consiste à (i) identifier la famille de modèles correspondant au mieux au modèle du tracé manuel du caractère, puis à (ii) identifier le modèle dans cette famille qui présente les paramètres géométriques de position les plus proches du modèle du tracé manuel du caractère comme cela a été décrit plus haut.

On comprendra que diverses modifications et/ou améliorations évidentes pour l'homme du métier peuvent être apportées au procédé et au dispositif de reconnaissance de caractère décrit dans la présente description sans sortir du cadre de l'invention défini par les revendications annexées. En particulier, on comprendra que le jeu de caractères illustrés aux figures 4a à 4d n'est nullement exhaustif ni limitatif des possibilités d'application de la présente invention. On comprendra également que la définition du sens de rotation w des segments courbes peut ou non être utilisée. L'invention n'est en outre pas limitée à son application dans une pièce d'horlogerie comme illustré en figure 1, ni à l'utilisation de capteurs capacitifs pour former la zone de saisie.

## Revendications

1. Procédé de reconnaissance de caractères tracés manuellement sur une zone de saisie (10) d'un dispositif électronique au moyen d'un doigt ou d'un instrument de traçage (13), cette zone de saisie (10) comprenant une pluralité de capteurs (15) susceptibles chacun d'être actionné au moyen dudit doigt ou dudit instrument de traçage (13), ce procédé consistant notamment à comparer le tracé manuel d'un caractère (100) réalisé sur ladite zone de saisie (10) avec un ensemble de caractères d'un jeu prédéterminé de caractères,
ce procédé étant **caractérisé en ce que** chaque caractère dudit jeu de caractères est représenté par au moins un modèle représentatif d'une manière avec laquelle le caractère en question peut être tracé, et **en ce que** l'on élabore un modèle représentatif de la manière avec laquelle ledit tracé manuel du caractère (100) a été réalisé sur ladite zone de saisie (10),
- les modèles comprenant au moins des paramètres topologiques concernant la topologie du caractère, à savoir, notamment :
(i) le nombre de passes (A, B, C, D, ...) employées pour tracer le caractère;
(ii) la nature de chaque passe (A, B, C, D, ...), à savoir s'il s'agit d'une passe de nature uni- ou bidimensionnelle; et
(iii) la composition de chaque passe de nature bidimensionnelle, à savoir :
- le nombre de segments (A1, A2, ..., B1, B2, ...) composant ladite passe de nature bidimensionnelle; et
- la nature de chaque segment (A1, A2, ..., B1, B2, ...), à savoir s'il s'agit d'un segment de nature rectiligne ou courbe,
- les modèles comprenant en outre, le cas échéant :
(iv) pour chaque segment de nature rectiligne ou courbe (A1, A2, ..., B1, B2), des paramètres géométriques (φ, φ₁, φ₂, α) représentatifs de l'évolution de l'orientation angulaire du tracé du segment (A1, A2, ..., B1, B2, ...); et/ou
(v) pour chaque passe de nature uni- ou bidimensionnelle (A, B, C, D, ...), des paramètres géométriques (P₀, P₁, P₂) représentatifs de la position de la passe (A,B,C,D,...),
ce procédé consistant essentiellement à :
- déterminer un ensemble de candidats, parmi les modèles des caractères dudit jeu de caractères, qui présentent des paramètres topologiques analogues au modèle dudit tracé manuel du caractère (100); puis
- si l'ensemble de candidats comprend plus d'un candidat, identifier le candidat qui présente les paramètres géométriques d'évolution de l'orientation angulaire (φ, φ₁, φ2, α) et/ou de position (P₀, P₁, P₂) les plus proches du modèle dudit tracé manuel du caractère (100).

2. Procédé selon la revendication 1, **caractérisé en ce que** les modèles sont regroupés en une pluralité de familles en fonction de leurs paramètres topologiques et, le cas échéant, de leurs paramètres géométriques d'évolution de l'orientation angulaire (φ, φ₁, φ₂, α), chaque famille comportant un ou plusieurs modèles qui ne peuvent être différenciés des autres modèles de la famille qu'en fonction de leur paramètres géométrique de position (P₀, P₁, P₂),
le procédé consistant à :
- identifier la famille de modèles correspondant au mieux au modèle du tracé manuel du caractère (100); puis
- identifier le modèle dans ladite famille qui présente les paramètres géométriques de position (P₀, P₁, P₂) les plus proches du modèle du tracé manuel du caractère (100).

3. Procédé selon la revendication 1 ou 2, **caractérisé en ce que** lesdits paramètres géométriques représentatifs de l'évolution de l'orientation angulaire du tracé du segment (A1, A2, ..., B1, B2, ...) incluent au moins :
- pour un segment de nature rectiligne, l'orientation angulaire (φ) dudit segment; et
- pour un segment de nature courbe, l'orientation angulaire de départ (φ₁) ou d'arrivée (φ₂) à une extrémité dudit segment de nature courbe,
et **en ce que** lesdits paramètres topologiques incluent également, pour un segment de nature courbe, le sens de rotation (w) dudit segment, ce sens de rotation (w) étant au moins trigonométrique ou non-trigonométrique.

4. Procédé selon la revendication 3, **caractérisé en ce que** lesdits paramètres géométriques représentatifs de l'évolution de l'orientation angulaire du tracé du segment (A1, A2, ..., B1, B2, ...) incluent en outre :
- pour un segment de nature courbe, l'angle de développement total (α) dudit segment de nature courbe.

5. Procédé selon l'une quelconque des revendications 1 à 4, **caractérisé en ce que** lesdits paramètres topologiques incluent également, pour chaque passe de nature bidimensionnelle, une indication selon laquelle ladite passe est fermée ou ouverte.

6. Procédé selon l'une quelconque des revendications 1 à 5, **caractérisé en ce que** lesdits paramètres géométriques (P₀, P₁, P₂) représentatifs de la position de la passe (A, B, C, D, ...) incluent la position, sur ladite zone de saisie (10) ou par rapport au tracé du caractère, d'au moins un point représentatif de ladite passe (A, B, C, D, ...), à savoir la position (P₀) d'une passe de nature unidimensionnelle et au moins la position (P₁, P₂) d'une extrémité d'une passe de nature bidimensionnelle.

7. Procédé selon l'une quelconque des revendications précédentes, **caractérisé en ce que** lesdits paramètres concernant la topologie du caractère incluent en outre une indication concernant la position approximative, sur ladite zone de saisie (10) ou par rapport au tracé du caractère, d'une passe de nature unidimensionnelle ou d'au moins une extrémité d'une passe de nature bidimensionnelle, à savoir si cette passe ou cette extrémité se situe sensiblement dans une partie haute ou basse, et/ou gauche ou droite de ladite zone de saisie (10) ou du tracé du caractère.

8. Procédé selon l'une quelconque des revendications précédentes, **caractérisé en ce qu'**il comprend les étapes suivantes :
(a) échantillonnage (S100) du tracé manuel du caractère réalisé sur ladite zone de saisie (10);
(b) détermination (S102) du nombre de passes (A, B, C, D, ...) employées pour réaliser ledit tracé manuel du caractère;
(c) sélection (S104) d'un premier ensemble de candidats comprenant un nombre de passes (A, B, C, D, ...) identique;
(d) si ledit premier ensemble ne comprend aucun candidat (S106), interruption de la reconnaissance, sinon, détermination de la nature, de la composition et de la géométrie de chaque passe (S108 à S120), à savoir :
- s'il s'agit d'une passe de nature unidimensionnelle, détermination de la position (P₀) de ladite passe (S109); ou
- s'il s'agit d'une passe de nature bidimensionnelle, segmentation de la passe afin de déterminer le nombre de segments la composant (S110), détermination de la nature rectiligne ou courbe de chaque segment (S114), et détermination de la géométrie de chaque segment (S115, S116), à savoir notamment la position (P₁, P₂) des extrémités de chaque segment et :
- pour chaque segment de nature rectiligne, l'orientation angulaire (φ) de chaque segment; ou
- pour chaque segment de nature courbe, les orientations angulaires de départ (φ₁) et d'arrivée (φ₂) aux extrémités dudit segment ainsi que le sens de rotation (w) dudit segment, ce sens de rotation (w) étant au moins trigonométrique ou non-trigonométrique;
(e) élaboration (S122) du modèle représentatif dudit tracé manuel du caractère;
(f) sélection (S124) d'un second ensemble de candidats, parmi les candidats dudit premier ensemble, dont la nature et, le cas échéant, la composition de chaque passe sont identiques à celles du modèle dudit tracé manuel du caractère;
(g) si ledit second ensemble ne comprend aucun candidat (S126), interruption de la reconnaissance, sinon, sélection (S128) d'un troisième ensemble de candidats, parmi les candidats dudit second ensemble, dont la géométrie en terme d'orientation angulaire (φ, φ₁, φ₂) des segments est la plus proche de celle du modèle dudit tracé manuel du caractère; et
(h) si ledit troisième ensemble ne comprend qu'un candidat (S130), validation dudit candidat (S134), sinon, sélection (S132) du candidat, parmi les candidats du troisième ensemble, dont la géométrie en terme de position (P, P₁, P₂) est la plus proche de celle du modèle dudit tracé manuel du caractère, puis validation du candidat (S134).

9. Procédé selon la revendication 8, **caractérisé en ce que** ledit jeu de caractères comprend un ensemble de caractères de commande spécifiques à chacun desquels est associée une commande déterminée, ces caractères de commande spécifiques étant représentés chacun par un modèle univoque comprenant au moins une passe composée d'un nombre de segments supérieur à une limite déterminée,
et **en ce que**, si le nombre de segments déterminé dans une passe à l'étape d) est supérieur à ladite limite déterminée (S112), ledit premier ensemble de candidats est restreint au dit ensemble de caractères de commande spécifiques (S113), auquel cas ni la nature rectiligne ou courbe des segments, ni la géométrie de ces segments ne sont déterminées,
le caractère de commande spécifique dont la nature et la composition de chaque passe sont identiques à celles du modèle du tracé manuel du caractère étant alors sélectionné à l'étape f), et la commande associée alors exécutée.

10. Dispositif électronique de reconnaissance de caractères comportant :
- une zone de saisie (10) comprenant une pluralité de capteurs (15) susceptibles chacun d'être actionné au moyen d'un doigt ou d'un instrument de traçage (13);
- des moyens de détection (41, 42) permettant de produire, pour chaque capteur (15) de ladite zone de saisie (10), à un instant déterminé, un signal représentatif de l'activation dudit capteur par ledit doigt ou ledit instrument de traçage (13);
- des moyens de traitement (45) notamment pour comparer le tracé manuel d'un caractère réalisé sur ladite zone de saisie (10) avec un ensemble de caractères d'un jeu prédéterminé de caractères (460);
ce dispositif étant **caractérisé en ce que** chaque caractère dudit jeu de caractères (460) est représenté par au moins un modèle représentatif d'une manière avec laquelle le caractère en question peut être tracé, et **en ce que** lesdits moyens de traitement (45) sont agencés pour élaborer un modèle représentatif de la manière avec laquelle ledit tracé manuel du caractère a été réalisé sur ladite zone de saisie (10),
- les modèles comprenant au moins des paramètres topologiques concernant la topologie du caractère, à savoir, notamment :
(i) le nombre de passes (A, B, C, D, ...) employées pour tracer le caractère;
(ii) la nature de chaque passe (A, B, C, D, ...), à savoir s'il s'agit d'une passe de nature uni- ou bidimensionnelle; et
(iii) la composition de chaque passe de nature bidimensionnelle, à savoir :
- le nombre de segments (A1, A2, ..., B1, B2, ...) composant ladite passe de nature bidimensionnelle; et
- la nature de chaque segment (A1, A2, ..., B1, B2, ...), à savoir s'il s'agit d'un segment de nature rectiligne ou courbe,
- les modèles comprenant en outre, le cas échéant :
(iv) pour chaque segment de nature rectiligne ou courbe (A1, A2, ..., B1, B2, ...), des paramètres géométriques (φ, φ₁, φ₂, α) représentatifs de l'évolution de l'orientation angulaire du tracé du segment (A1, A2, ..., B1, B2, ...); et/ou
(v) pour chaque passe de nature uni- ou bidimensionnelle (A, B, C, D, ...), des paramètres géométriques (P₀, P₁, P₂) représentatifs de la position relative ou absolue de la passe (A, B, C, D, ...),
lesdits moyens de traitement (45) comprenant :
- des moyens pour déterminer un ensemble de candidats, parmi les modèles des caractères dudit jeu de caractères, qui présentent des paramètres topologiques analogues au modèle dudit tracé manuel du caractère; et
- des moyens pour identifier, dans l'éventualité où l'ensemble de candidats comprend plus d'un candidat, le candidat qui présente les paramètres géométriques d'évolution de l'orientation angulaire (φ, φ₁, φ₂, α) et/ou de position (P₀, P₁, P₂) les plus proches du modèle dudit tracé manuel du caractère.

11. Dispositif selon la revendication 10, **caractérisé en ce qu'**il comporte en outre un dispositif d'affichage (55) pour afficher au moins temporairement une image du tracé manuel du caractère réalisé par ledit doigt ou ledit instrument de traçage (13) sur ladite zone de saisie (10).
